# EUROPEAN PATENT SPECIFICATION

(11) **EP 1 122 842 B1**
(45) Date of publication and mention of the grant of the patent: **22.09.2010**
(21) Application number: 01301100.2
(22) Date of filing: 07.02.2001
(51) Int. Cl.: H01S 3/067, H01S 3/094, H01S 3/30, H04B 10/17

(54) **Method for optical direct amplification, and optical amplification repeater and optical transmission system using the same**
Verfahren und Vorrichtung zur optischen Verstärkung und optisches Übertragungssystem, das diese Vorrichtung verwendet
Méthode et dispositif d'amplification optique et système de transmission optique utilisant ledit dispositif

(30) Priority: 07.02.2000 JP 2000029376
(43) Date of publication of application: 08.08.2001
(73) Proprietor: NEC Corporation, Minato-ku Tokyo 108-8001 (JP)
(72) Inventor: Yoneyama, Kenichi, Minato-ku, Tokyo (JP)
(74) Representative: Moir, Michael Christopher

(56) References cited:
- EP-A- 0 734 105
- EP-A- 0 911 926
- EP-A- 1 054 489
- WO-A-98/42088
- MASUDA H ET AL: "ULTRAWIDE 75-NM 3-DB GAIN-BAND OPTICAL AMPLIFICATION WITH ERBIUM- DOPED FLUORIDE FIBER AMPLIFIERS AND DISTRIBUTED RAMAN AMPLIFIERS" IEEE PHOTONICS TECHNOLOGY LETTERS, IEEE INC. NEW YORK, US, vol. 10, no. 4, 1 April 1998 (1998-04-01), pages 516-518, XP000754212 ISSN: 1041-1135

## Description

### BACKGROUND OF THE INVENTION

### 1. Field of the Invention

The present invention relates to a method for optical direct amplification, and an optical amplification repeater and an optical transmission system using the method. In particular, it relates to a method for optical direct amplification that includes the capability of adjusting wavelength dependency of gain, and an optical direct amplification repeater and an optical transmission system using the method.

### 2. Description of the Related Art

To increase the transmission capacity of an optical communication system, there is known a wavelength division multiplexed light transmission system that wavelength-multiplexes plural kinds of signal light different in wavelength from one another. Further, like systems for transmitting light with a single wavelength, the wavelength division multiplexed light transmission system has optical amplification repeaters inserted in the transmission line to amplify and relay optical signals, allowing a long-haul optical transmission. Such a wavelength division multiplexed light transmission scheme is expanding its applicability not only to overland transmission systems, but also to submarine optical relay transmission systems that carry out optical transmission over very long distances via many relays. In the submarine optical relay transmission system, optical amplification repeaters arranged in the optical fiber transmission line must be adapted to the wavelength division multiplexed light transmission scheme. That is, optical amplification repeaters of the type that amplify a batch of light at a time without being divided on a wavelength basis is needed for relay and amplification of wavelength multiplexed signal light. Using this type of repeaters, the transmission capacity will be increased without upsizing the optical amplification and relay apparatus.

One form of optical amplifiers that amplify a batch of optical signals without being divided on a wavelength basis is an optical fiber doped with rare-earth materials. Optical amplification gain properties of the optical fiber amplifier, however, have a dependence on wavelength. The wavelength dependency causes variations in the output level of wavelength multiplexed signal light after amplification, though the wavelength multiplexed signal light has such a flat wavelength characteristic as to show no level difference among signal light components at the time of input to the optical fiber. The wavelength dependency of the amplification gain also varies with the optical input level. Therefore, as the optical input level decreases due to an increase in loss such as long-term deteriorating influences on the optical fiber transmission line, the wavelength multiplexed optical signals may not be amplified uniformly, resulting in reduction in the quality of transmission. Particularly, for the submarine optical amplification and relay system, which has a plurality of optical amplification repeaters arranged in the optical fiber transmission line, variations in the optical output level among wavelengths are superimposed one upon another each time the wavelength multiplexed signal light passes through the optical amplification repeater. Thus, even if the level difference produced at each optical repeater is small, the level difference in the entire system, and hence the influence thereof on the system's performance becomes large.

One way to solve the above-mentioned problem is to provide the capability of adjusting wavelength dependency of gain in the optical amplification and relay system. One method of adjusting the wavelength dependency of gain is described, for example, in the following paper: "Active Gain Slope Compensation in Large-Capacity, Long-haul WDM Transmission system," by Takao Naito et. al., in "Optical Amplifiers and Their Applications '99," Technical Digest WC5, pp. 336 to 339, June 1999. This paper offers a configuration using a gain equalizer to adjust the dependence of loss on wavelength. This method, however, makes the arrangement of the optical amplification repeaters complicated, resulting in upsizing of the apparatuses.

EP0734105 A2 describes an optical fiber amplifier and a dispersion compensating fiber module for use with an optical fiber amplifier.

EP0911926 A1 describes an optical amplifier having a two-stage construction using an erbium doped fiber (EDF) as a gain medium, and a transmission system using the optical amplifier.

WO98/42088 discloses a multiple stage optical amplifier which includes a Raman fiber amplifier first stage coupled to a rare earth doped fiber amplifier which provides a second amplifier step.

Masuda H Et al; "Ultra wide 75-nm 3-dB gain-band optical amplification with erbium-doped fluoride fiber amplifiers and distributed Raman amplifiers", IEEE Photonics Technology letters, IEEE Inc. New York, US, Vol. 10, No. 4, 1, April 1998, pages 516 to 518, describes a partially gain-flattened erbium-doped fluoride fiber amplifier and a distributed Raman amplifier with which a 3-dB gain-bandwidth of 75nm is reportedly achieved.

EP1054489 A2 , published on 22 november 2000 and claiming the priority date of 19 may 1999, discloses an optical amplifier for a wavelength division multiplex communication system, including a first amplifier stage responsive in changes in gain to cause a wavelength dependent gain tilt in one direction, a second amplifier stage responsive to corresponding changes in gain to cause a wavelength depending gain tilt in an opposite direction and gain control means for controlling the gain for the first and second amplifier stages.

### SUMMARY OF THE INVENTION

It is therefore an object of the preferred embodiments of the present invention to provide a highly-reliable, optical direct amplification method, optical amplification repeater and optical transmission system, which include the capability of adjusting wavelength dependency of amplification gain so that optical relay and amplification transmission of wavelength multiplexed signal light can be carried out while keeping the signal level of each wavelength constant.

According to one aspect of the present invention there is provided an optical direct amplification method as defined in claim 1.

In another aspect invention, there is provided a optical amplification repeater as defined in claim 11. The above-mentioned basic structure features that the first excitation light is not only transmitted through the optical amplification medium, but also output to the input side of the optical fiber transmission line. That is, the excitation light emitted from the excitation light source is induced in a direction opposite to the direction in which the signal light passes through the optical amplification medium, whereby residual excitation light that has passed through without being absorbed by the optical amplification medium is output toward the input side of the optical fiber transmission line oppositely from the signal light.

The optical amplification repeater may be such that the residual excitation light output to the input side of the optical fiber transmission line produces an effect of Raman amplification in the optical fiber transmission line so that the signal light will be amplified in the optical fiber transmission line before being input to the optical amplification repeater. This configuration has the first advantage of allowing control of optical output of the excitation light emitted from the excitation light source to control the Raman amplification gain so that the optical output level of the signal light input to the optical amplification medium can be adjusted. Optical amplification gain of the optical amplification effect in induced radiation type generally has wavelength dependency (called gain tilt), which varies with the input level of the signal light. Optical amplification caused by the Raman amplification effect also has wavelength dependency of gain. Taking this positively, even if a gain tilt is caused by optical amplification in the optical amplification medium, the wavelength dependency of the Raman amplification gain can cancel the wavelength dependency of the gain in the optical amplification medium to flatten the gain spectrum. Erbium doped fiber can be used for the optical amplification medium in a case where signal light in a wavelength range of 1550 nm is to be amplified. In this case, excitation light with a wavelength of 1480 or 980 nm may be used. The present invention is, of course, widely applicable to signal light with any wavelength other than the above-mentioned one.

The optical amplification repeater may further comprise, in addition to the above-mentioned configuration, an optical isolator that selectively passes only the light traveling from the input port toward the output port while shutting out the light traveling in the opposite direction. According to the present invention, the optical isolator prevents entry of the excitation light of another optical amplification repeater arranged at a post-stage into the optical amplification repeater through the optical transmission line

The optical amplification repeater may further comprise, in addition to the first excitation light source, a second excitation light coupled with the signal light through a second wavelength multiplexing coupler and launched into the optical amplification medium from the front.

The optical amplification repeater according to the present invention may have a gain equalizer arranged in the output side of the optical amplification medium to flatten the level of the wavelength multiplexed signal light produced by wavelength-multiplexing plural kinds of signal light different in wavelength from one another. The gain equalizer may be such an equalizer as to flatten the wavelength multiplexed signal light after amplification in a case where the gain of the optical amplification repeater has been set to a given value.

The above-mentioned optical amplification repeater according to the present invention may further comprise an excitation-light output control circuit that controls the output level of the first excitation light in response to a control signal, and a control signal receiving circuit that extracts control signal light contained in the wavelength multiplexed signal light and sends out the extracted control signal light to the excitation-light output control circuit. In this case, the control signal is further superimposed on the wavelength multiplexed signal light in advance at a sending end station so that excitation light power of the optical amplification repeater can be remotely controlled by the control signal. The control signal is superimposed on the wavelength multiplexed signal light or wavelength-multiplexed into signal light with a different wavelength.

The optical output-level detection circuit can be constituted of: a first optical directional coupler that branches part of the wavelength multiplexed signal light optically amplified to output the branched wavelength multiplexed signal light; a second optical directional coupler that further branches part of the branched wavelength multiplexed signal light into each signal light component to output the branched signal light component; an optical receiver that receives the branched signal light component to output an electric signal according to the output level; and a control signal output circuit that calculates from the electric signal level difference of the outputs to send out a control signal.

Variations in the output level of the signal light detected may be evaluated on the basis of the level difference of signal light with a certain wavelength selected in advance from among all the wavelengths contained in the wavelength multiplexed signal light output from the optical amplification medium. Then the optical output of the excitation light under control is so fed back that the level will be reduced by the amount of difference.

Instead of the above-mentioned feedback control, another control method for the output of the excitation light can also be used, which controls the output of the excitation light by means of an excitation-light output-level control circuit that includes a memory storing a relationship between the flatness of output level and driving current to be applied to the first excitation light source, and a driving-current setting circuit for selecting the driving current on the basis of the contents stored in the memory.

Further, another possible method for remotely controlling the output of the excitation light by adding a control signal from the outside is such that a feeder line, which provides power for the optical amplification repeater, is used to send a control signal so that the excitation-light output control circuit can receive the control signal to control the optical output of the first excitation light. In other words, the control signal send from the end station may be in the form of the above-mentioned control signal light, or an electric signal superimposed on electric power supplied from the feeder line. Yet another possible method is such that the output of excitation light is remotely controlled according to the power feeding current or voltage value of the feeder line for the optical amplification repeater.

Some of the above-mentioned optical amplification repeaters commonly use a light source as the light source for exciting light through Er-doped fiber and the light source for exciting the Raman optical amplification effect in the optical fiber transmission line. That is, the common light source combines both excitation capabilities. The other optical amplification repeaters use two excitation light sources, each of which is exclusively used as a light source for individual optical amplification and excitation. The provision of the two excitation light sources increases the degree of flexibility in controlling respective amplification gain properties.

According to the present invention, there is also provided an optical transmission system that uses any one of the above-mentioned optical amplification repeaters as relays to be provided in the transmission line. In other words, the optical transmission system according to the present invention comprises: a light sending-end station at which an optical transmitter is provided for sending out signal light with wavelengths different from one another; the above-mentioned amplification repeaters; a light receiving-end station at which an optical receiver is provided for receiving wavelength multiplexed signal light to convert each signal light component into an electric signal; and optical fiber transmission lines for connections between the light sending-end station and the first optical amplification repeater, between the optical amplification repeaters, and between the last optical amplification repeater and the light receiving-end station, respectively.

### BRIEF DESCRIPTION OF THE DRAWINGS

Preferred features of the present invention will now be described, by way of example only, with reference to the accompanying drawings, in which:-
Fig. 1 is a diagram showing a configuration of an optical amplification repeater according to a first embodiment;
Fig. 2 is a diagram showing a configuration of a wavelength multiplexed light relaying transmission system using the optical amplification repeater;
Fig. 3 is a graph showing examples of wavelength dependency of gain of the optical amplification repeater;
Fig. 4 is a graph showing examples of wavelength dependency of Raman amplification gain in an optical fiber transmission line;
Fig. 5 (a) is a graph showing an example of an optical spectrum after optical amplification and relay of wavelength multiplexed signal light in a case where losses in the optical fiber transmission line increase;
Fig. 5 (b) is a graph showing an example of an optical spectrum after optical amplification and relay of wavelength multiplexed signal light in a case where a correction is made by adjusting excitation light;
Fig. 6 is a diagram showing a configuration of an optical amplification repeater according to a second embodiment:
Fig. 7 is a diagram showing a configuration of an optical amplification repeater according to a third embodiment;
Fig. 8 is a diagram showing a configuration of an optical amplification repeater according to a fourth embodiment;
Fig. 9 is a diagram showing a configuration of an optical amplification repeater according to a fifth embodiment;
Fig. 10 is a diagram showing a configuration of an optical amplification repeater according to a sixth embodiment;
Fig. 11 is a diagram showing a configuration of an optical amplification repeater according to a seventh embodiment;
Fig. 12 is a diagram showing a configuration of an optical amplification repeater according to an eighth embodiment;
Fig. 13 is a diagram showing a configuration of an optical amplification repeater according to a ninth embodiment; and
Fig. 14 is a diagram showing a configuration of an optical amplification repeater according to a tenth embodiment.

### DETAILED DESCRIPTION OF THE PREFERRED EMBODIMENTS

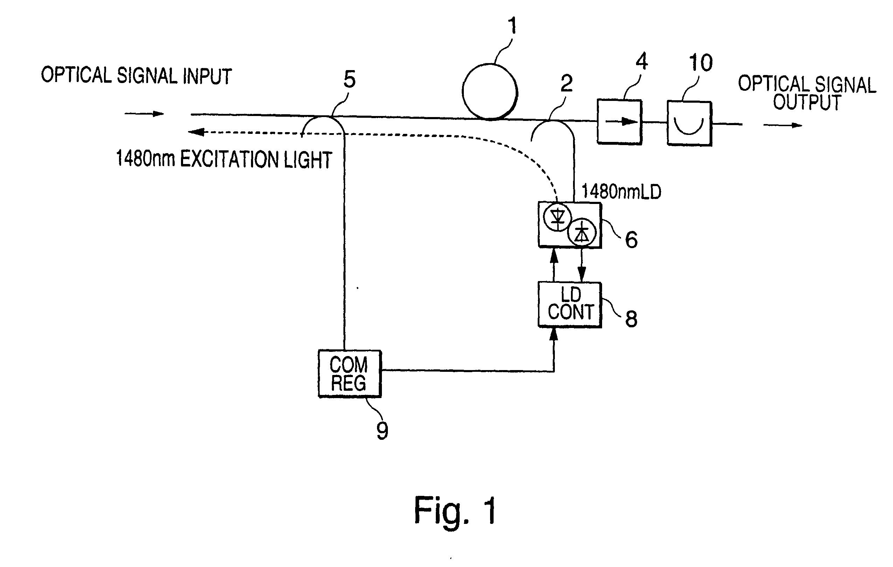

Fig. 1 shows an optical amplification repeater according to the first embodiment.
The optical amplification repeater uses an erbium (Er) doped fiber 1 as an optical amplification medium, and arranges a backward excitation light source 6 with a laser diode operating in a light wavelength range of 1480 nm. The backward pumping light output from the excitation light source 6 is induced in the optical amplification medium 1 by means of a wavelength multiplexing coupler 2. An excitation light source 6 is connected to a laser driving circuit 8 for controlling the optical output. An optical coupler 5 is then provided at the signal light input side of the optical amplification medium 1 so that part of the input signal light will be branched. The input signal light is wavelength multiplexed signal light produced by wavelength-multiplexing plural kinds of signal light with different wavelengths which belong to a wavelength range of 1550 nm. The optical coupler 5 branches part of the input wavelength multiplexed signal light power, while a control signal receiving circuit 9 extracts a control signal from the branched signal light. The control signal extracted is used to control, through a laser driving circuit 8, driving current for the 1480 nm wavelength laser diode, the laser diode provided in the backward excitation light source 6. An optical isolator 4 is arranged at the light output side of the optical amplification repeater. The optical isolator 4 prevents the output signal light of the optical amplification repeater from being reflected in the optical fiber transmission line on the output side and launched again into the optical amplification repeater. It also prevents input of excitation light into the optical amplification repeater from the next optical amplification repeater arranged ahead in the optical fiber transmission line. Further, a gain equalizer 10 is arranged at the output side of the optical isolator 4 so that the optical output level of the wavelength multiplexed signal light will be made uniform and flat. The gain equalizer is provided for correcting the level difference of the signal light resulting from the wavelength dependency of the optical amplification gain of the Er-doped fiber 1.

In the embodiment, the excitation light emitted from the excitation light source 6 excites the Er-doped fiber 1 by backward pumping, while it penetrates into the optical fiber transmission line connected in the signal input side of the Er-doped fiber 1. Further, the embodiment includes the optical coupler 5 and the control signal receiving circuit 9, and these two configuration elements serve to branch and receive the control signal from the light sending-end station away from the optical fiber transmission line on the input side so that the received control signal can be used to remotely control the power of the excitation light source 6.

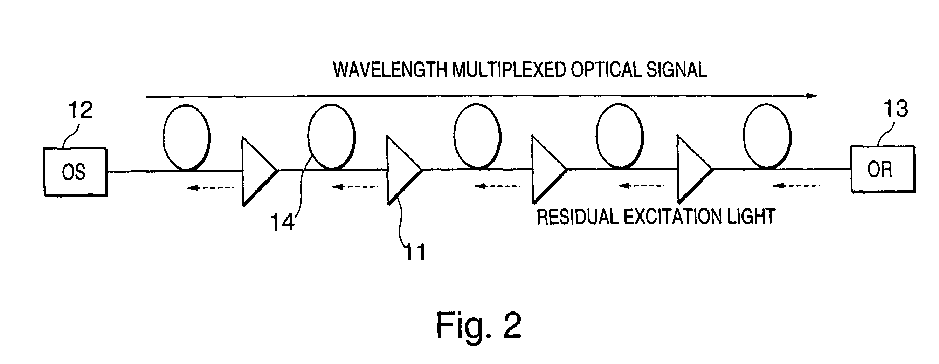

Fig. 2 shows a configuration of a wavelength-multiplexed light relaying transmission system using the optical amplification repeater,

The wavelength multiplexed light relaying transmission system includes a significant number of optical amplification repeaters 11 and optical fiber transmission line 14 as described herein, in which the optical amplification repeaters 11 and the optical fiber transmission is lines 14 are arranged in series between a light sending-end station 12 and a light receiving-end station 13. In operation, wavelength multiplexed signal light sent from the light sending-end station 12 is attenuated as it travels through the optical fiber transmission lines 14, while it is relayed by and amplified at each optical amplification repeater 11 before being transmitted to the light receiving-end station 13. In the wavelength multiplexed light relaying transmission system, excitation light at each optical amplification repeater penetrates into each optical fiber transmission line connected in the signal input side of each optical amplification repeater. For example, as shown in Fig. 2, residual excitation light is sent out from the optical amplification repeater 11 to the optical fiber transmission line 14 connected in the direction toward the input side of the signal light as indicated by the broken arrow. The residual excitation light thus traveling in the optical fiber transmission line is used as described later to control the input power level of the signal light input to the optical amplification repeater 11 while flatting the gain of the optical amplification repeater.

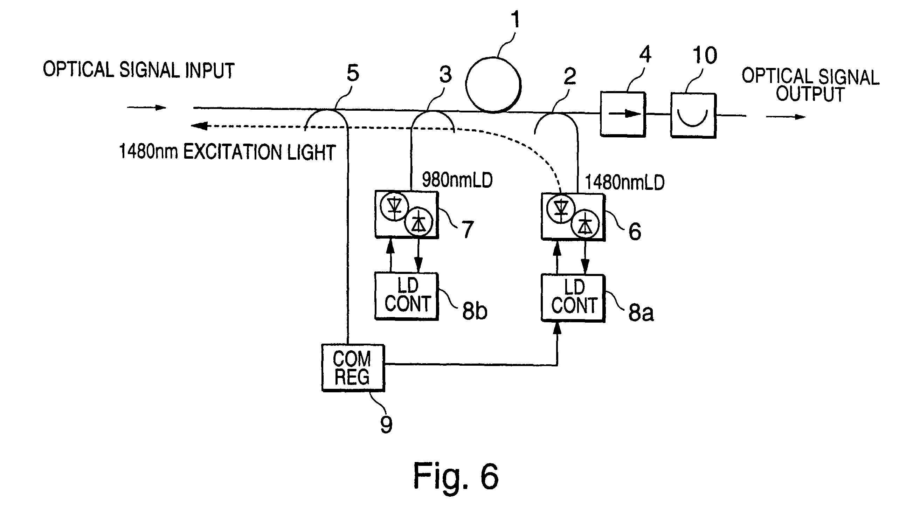

It should be noted that the optical amplification repeater applied to the wavelength multiplexed light relaying transmission system shown in Fig. 2 is not limited to the optical amplification repeater according to the first embodiment shown in Fig. 1. Any other optical amplification repeaters according to second through tenth embodiments shown in Figs. 6 through 14 to be described later, and their modifications are also applicable.

Returning to Fig. 1, the operation of the optical amplification repeater according to the first embodiment will now be described. In operation, excitation light output from the excitation light source 6 is input to the Er-doped fiber 1 as the optical amplification medium by means of the wavelength multiplexing coupler 2 to make the Er-doped fiber 1 excited. The laser driving circuit 8 monitors the power of the excitation light through a photodiode incorporated in the excitation light source 6 to control driving current of the excitation light source so that a required output of the excitation light can be achieved. The signal light entering the optical amplification repeater from the optical fiber transmission line is amplified by induced emission when passing through the Er-doped fiber 1. The amplified signal light is output to an optical fiber transmission line arranged at a post-stage after passing through the optical isolator 4 and the gain equalizer 10.

The residual excitation light that has been output from the excitation light source 6 but not entirely absorbed in the Er-doped fiber 1 is output to the optical fiber transmission line in a direction opposite to the direction the signal light travels. The residual excitation light into the optical fiber transmission line causes a Raman amplification effect in the optical fiber transmission line. The Raman amplification effect serves to amplify the signal light propagated through the optical fiber transmission line. Thus the input signal light is amplified by the Raman amplification effect before being input to the optical amplification repeater. Under this condition, the optical output of the excitation light emitted from the excitation light source 6 is so controlled that the Raman amplification gain in the optical fiber transmission line can be adjusted, thereby adjusting the level of the signal light to be input to the optical amplification repeater.

Such an optical amplifier as to use induced emission, like the Er-doped optical fiber amplifier, varies the wavelength dependency of gain as the magnitude of gain varies. Therefore, if the level of the excitation light is so controlled that the Raman amplification gain in the optical fiber transmission line is adjusted, the input level of the signal light to the optical amplification repeater varies. As the input level of the signal light varies, the wavelength dependency of the optical amplification repeater gain varies, which ultimately adjusts the wavelength dependency of the signal light leaving the optical amplification repeater.

In other words, the excitation light power of the excitation light source 6 is adjusted to control both the Raman amplification gain in the optical fiber transmission line and the optical amplification gain in the Er-doped fiber. To be more specific, if the Er-fiber amplifier is to amplify signal light in a wavelength range of 1550 nm, for example, a excitation laser operating in a wavelength range of 1480 nm can be used as the excitation light source 6 to cause the Raman amplification effect efficiently.

The signal light sent from the light sending-end station contains a control signal for use in controlling excitation light for the optical amplification repeater. The light component containing the control signal is branched away from the signal light by means of the optical coupler 5, and induced into the control signal receiving circuit 9. The control signal receiving circuit 9 extracts the control signal from the light sent from the light sending-end station to control the laser driving circuit 8 so that the optical output of the excitation light source 6 can be adjusted according to the value indicated in the control signal. This makes it possible for the light sending-end station to remotely control the optical power of the excitation light, and hence the Raman amplification gain and the wavelength dependency of the optical amplification gain in the optical amplification repeater.

The control signal may be transmitted by modulating the amplitude, frequency or phase of the signal light. Alternatively, light of another wavelength for exclusive use of the control signal may be used and modulated by the control signal, and superimposed on the wavelength multiplexed signal light so that the control signal can be transmitted in the form of the wavelength multiplexed signal light. In this case, it is preferable that the optical coupler 5 is formed by using an optical element having the capability of de-multiplexing light waves, rather than branching light components.

If the multi-stage relaying transmission system is formed by connecting conventional optical amplification repeaters without Raman amplification effect in the optical transmission line, the wavelength dependency is accelerated as the wavelength multiplexed signal light passes through each repeater, which increases difference of optical output level among signal light components different in wavelength from one another. In contrast, the use of the optical amplification repeater according to the present embodiments prevents this cumulative effect. In principle, the input level of the signal light to the optical amplification repeater decreases due to an increase in loss, such as long-term deteriorating influences on the optical fiber transmission line, or repairs to damage caused by cutting the optical fiber transmission line. The decrease in the input level of the signal light to the optical amplification repeater, in turn, increases the gain of the optical amplification repeater to vary the wavelength dependency of the gain. As a result, signal light of respective wavelengths may not be uniformly amplified to widen the level difference gradually during relay transmission, resulting in reduction in the quality of transmission. In this case, for the optical amplification repeater according to the present embodiments, the wavelength dependency of the amplification gain can be so adjusted remotely that the signal light of all the wavelengths can be transmitted in an originally uniform level.

The following explains the operating principles of the described embodiments more specifically by referring to its optical amplification characteristics.

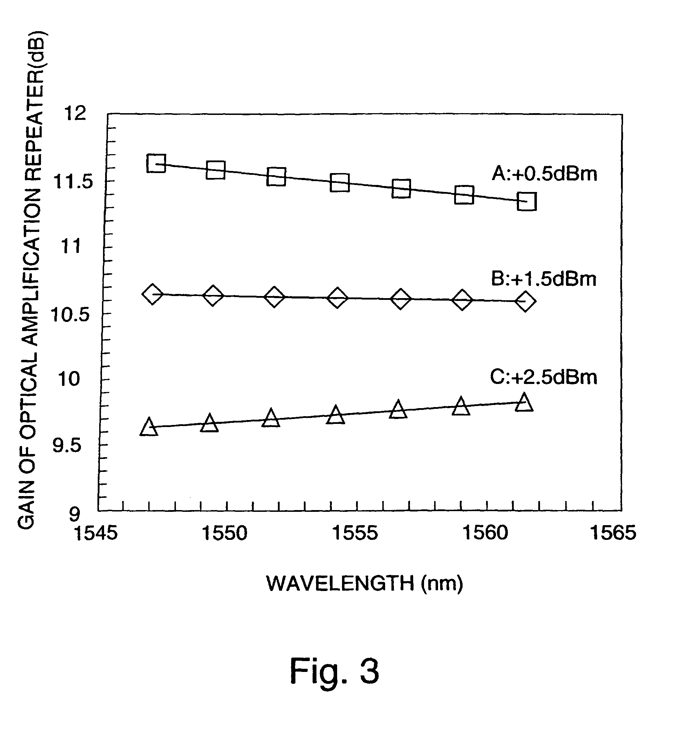

Fig. 3 is a graph showing the wavelength dependency of the gain of the optical amplification repeater using some input levels of optical signals as parameters. In general, the optical amplifier using Er-doped fiber is controlled to keep the output level after amplification constant. In other words, the smaller the level of input signal light, the greater the amplification gain. If the gain is great, the wavelength dependency of the gain is drawn as a characteristic curve indicated by A in Fig. 3, in which gain in a short wavelength range becomes greater than that in a long wavelength range. On the other hand, if the signal light input level increases to make the gain small, a characteristic curve is drawn as indicated by C in Fig. 3, in which gain in the short wavelength range becomes smaller than that in the long wavelength range.

When the optical amplification repeater is used to construct a wavelength multiplexed light relaying transmission system, if the optical amplification repeater has such a gain characteristic as to draw a flat characteristic curve indicated by B in Fig. 3, the signal light of respective wavelengths can be relayed and transmitted in a uniform level. However, once losses in the optical fiber transmission line increase due to deterioration or repairs after system construction, the input level of the signal light to the optical amplification repeater decreases. Because the optical amplification repeater operates in an output saturated state, the decrease in the input level does not affect the output level so much. That is, the output level does not vary very much, and as a result, the optical amplification repeater operates in such a state that the gain is great. In this case, the wavelength dependency of the gain of the optical amplification repeater draws an amplification characteristic curve as indicated in Fig. 3-A. Due to insufficient gain, the level of the signal light on the long wavelength side is lowered during relay transmission to reduce the quality of transmission.

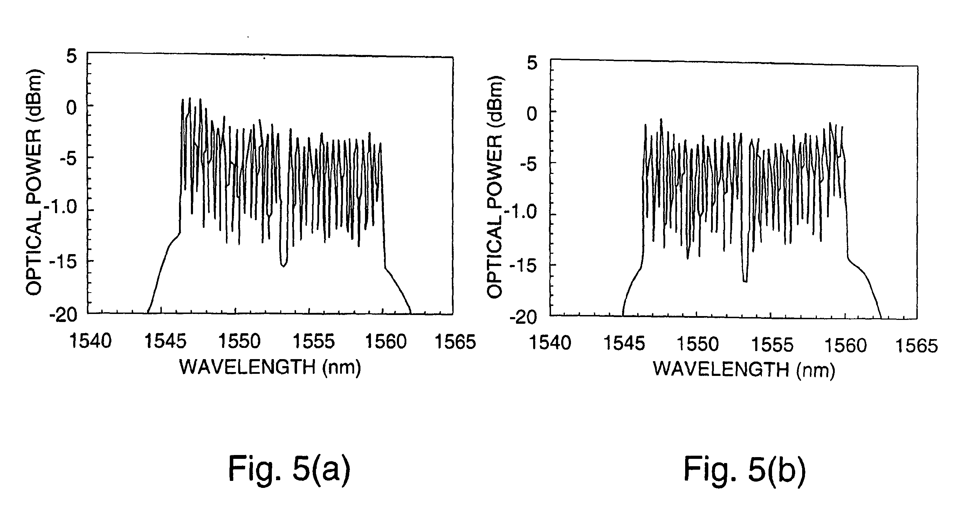

Fig. 5 shows examples of optical spectra after transmission of wavelength multiplexed signal light through a conventional multi-stage optical amplifying and relaying transmission system. In this case signal light of 33 multiplexed wavelengths is relayed and transmitted via 168 optical amplification repeaters. Fig. 5 (a) shows wavelength dependency of optical power in a case where optical amplification repeaters of the type that do not use the Raman amplification effect are used to relay and transmit signal light. As shown in this graph, the shorter the wavelength, the higher the optical output level after amplification, that is, the longer the wavelength, the lower the level.

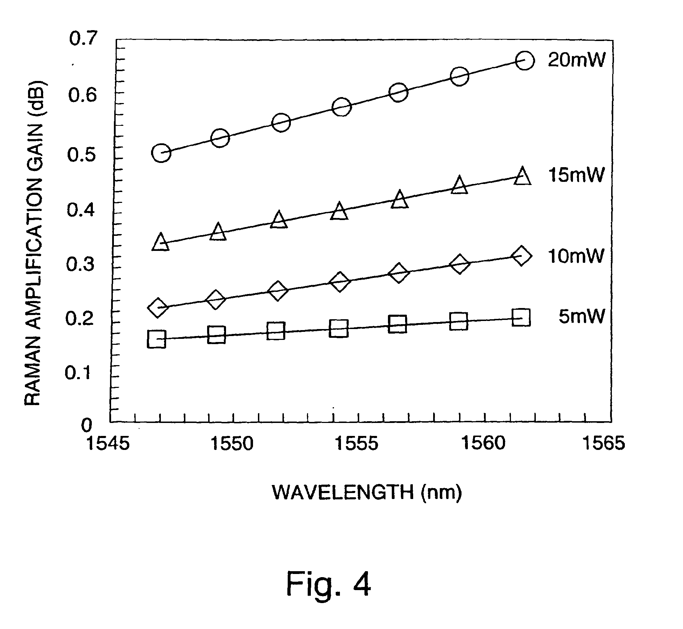

To maintain flat quality of transmission at any wavelength, a control signal is transmitted from the end station to increase the excitation light power of the excitation light source 6 so as to cause the Raman amplification effect in the optical fiber transmission line. Fig. 4 shows examples of characteristics of Raman amplification gain in the optical fiber pumped with 1480 nm light. As shown, the Raman amplification gain increases as the excitation light power increases. At the same time, the wavelength dependency of the gain tends to be greater as the wavelength becomes longer. The Raman amplification effect in the optical fiber transmission line increases the input level of the signal light to the optical amplification repeater to reduce the gain of the optical amplification repeater. When the gain of the optical amplification repeater is small, the wavelength dependency of the gain is changed to be greater in the long wavelength range, as indicated by curve C in Fig. 3, compared to that in the short wavelength range. As a result, both the Raman amplification gain and the optical amplification gain of the Er-doped fiber amplifier increase in the long wavelength range, which makes it possible to transmit the signal light of respective wavelengths with maintaining a uniform output level of the original signal light. Fig. 5 (b) shows spectral characteristics of optical power when the signal light is relayed and transmitted via optical amplification repeaters cooperate with Raman amplification.

Fig. 6 is a diagram showing a configuration of an optical amplification repeater according to the second embodiment. This embodiment is different from the first embodiment shown in Fig. 1 in that another excitation light source 7 for forward pumping is arranged at the signal input side of the Er-doped fiber 1. The forward excitation light source 7 thus arranged is provided with a laser diode operating in a wavelength range of 980 nm for use in exciting the Er-doped fiber 1 optically. Forward excitation light output from the excitation light source 7, and backward excitation light output from the excitation light source 6 are induced into the Er-doped fiber 1 by means of wavelength multiplexing couplers 3 and 2, respectively. The excitation light sources 6 and 7 are connected to laser driving circuits 8a and 8b, respectively, so that optical outputs of the excitation light sources are controlled. The provision of the forward excitation light in addition to the backward excitation light widens the range of gain settable for the Er-doped fiber 1 compared to that in the first embodiment. At this point, the second embodiment can be much preferable to the first embodiment..

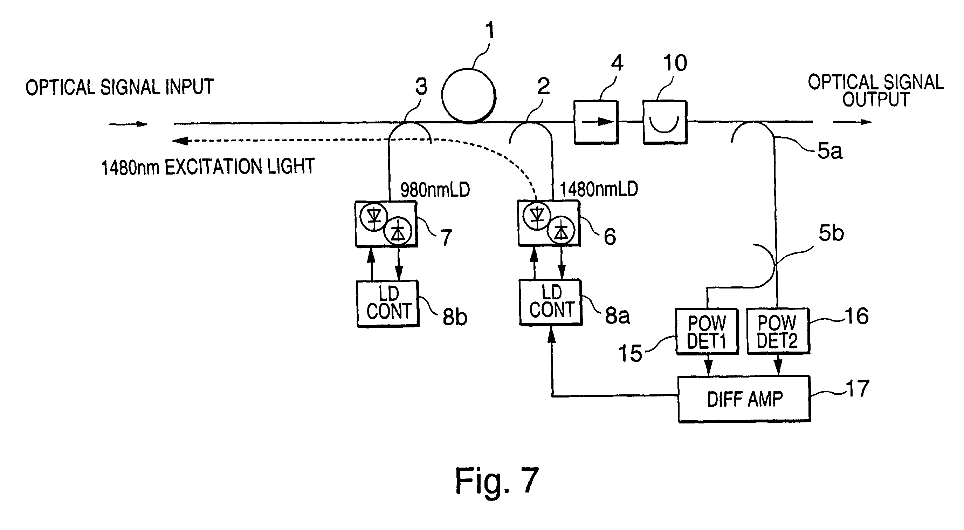

Fig. 7 is a diagram showing a configuration of an optical amplification repeater according to the third embodiment. In the embodiment, an optical directional coupler 5a is arranged at the output port side of the optical amplification repeater. The optical directional coupler branches part of the wavelength multiplexed signal light power. Of all the light components of the wavelength multiplexed signal light thus branched, signal light on the short wavelength side are then split and extracted from the branched signal light by means of an optical de-multiplexing splitter 5b. A light receiving circuit 15 receives signal light of short wavelengths, while a light receiving circuit 16 receives signal light of long wavelengths. A difference detection circuit 17 detects a difference of optical output level between the light signals detected at the light receiving circuits 15 and 16, respectively. On the basis of the detection result, the excitation light output of the excitation light source 6 commonly used as the backward excitation light source for the Er-doped fiber 1 and the Raman amplification light source for the optical fiber transmission line is so controlled that optical outputs of the signal light become equal both in the short and long wavelength ranges. According to the embodiment, the signal light is automatically controlled to make the wavelength dependency uniform. That is, according to the embodiment, a feed back loop is formed in the optical amplification repeater to flatten the wavelength characteristic of the output signal light. This makes it unnecessary for the light sending-end station to send out the control signal to the optical amplification repeater as required in the first and second embodiments.

It should be noted that the configuration for detecting the wavelength dependency of the signal light output from the optical amplification repeater is not limited to that shown in Fig. 7. For example, two optical splitters may be arranged along the direction the signal light travels so that part of light of each wavelength is branched. The configuration may also be such that the wavelength multiplexed signal light is branched by the optical directional coupler to extract and detect branched components of the wavelength multiplexed signal light one by one through a tunable (wavelength-varying) filter.

Further, the method for detecting the flatness of the output signal light relative to the wavelength is not limited to the above-mentioned method in which detection is made by dividing the wavelength multiplexed signal light into two parts, i.e., long wavelength side and short wavelength side. For example, two specific components of the signal light, such as a component of the longest wavelength and a component of the shortest wavelength, may be extracted to calculate a difference of these optical signal levels so as to evaluate the flatness to the wavelength. Alternatively, the wavelength and optical output level of a signal light component exhibiting the highest optical output level are so detected that the flatness to the wavelength will be evaluated from three points including the above-mentioned levels of the longest- and shortest-wavelength component of the signal light.

Further, a relationship between dispersion of optical output level relative to wavelength in the amplified signal light, and driving current to be applied to the excitation light source for cancellation of the dispersion may be measured and stored in a memory (not shown) beforehand so that the optical output of the excitation light will be controlled on the basis of the stored result.

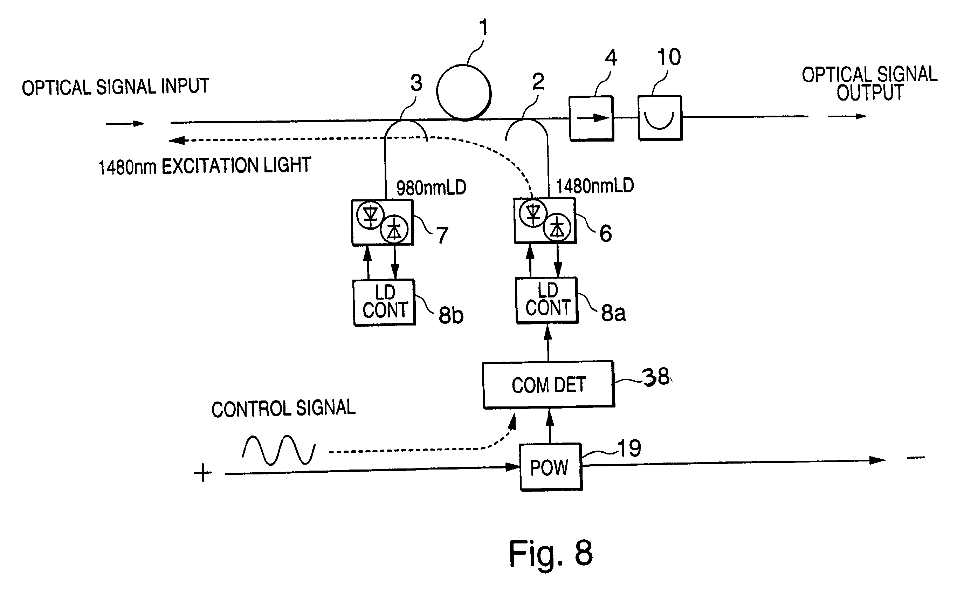

Fig. 8 is a diagram showing a configuration of an optical amplification repeater according to the fourth embodiment. In the embodiment, the control signal sent out from the light sending-end station is supplied to the optical amplification repeater in the form of an electrical AC signal superimposed on a feeder line, rather than transmitted in the form of the multiplexed signal light into which the control signal is multiplexed. The electrical AC signal superimposed on the feeder line is separated by a power supply circuit 19 of the optical amplification repeater. Then a control signal receiving circuit 38 receives the electrical AC signal to control the excitation light source 6 according to the amplitude or frequency of the signal.

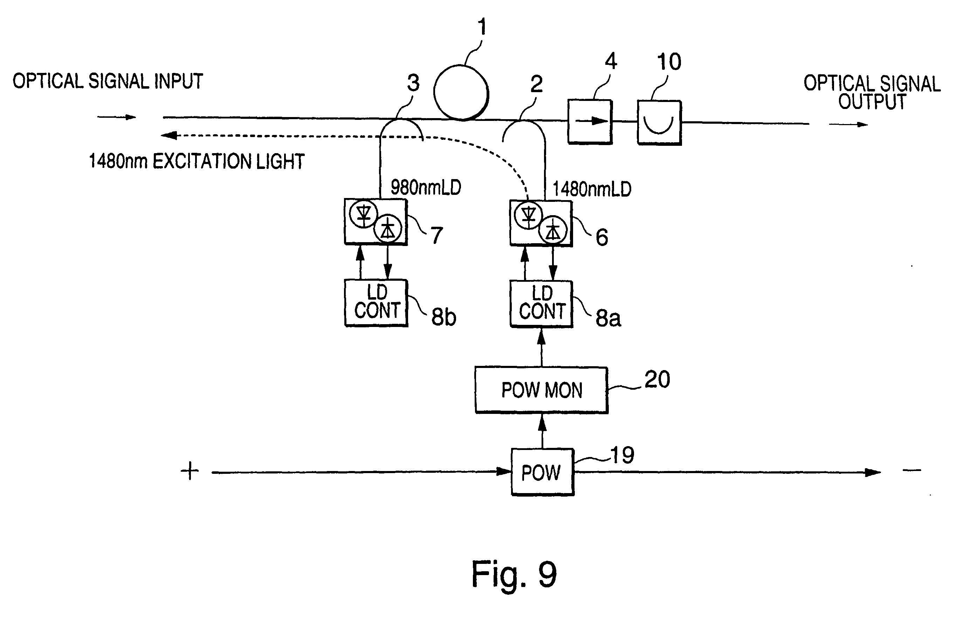

Fig. 9 is a diagram showing a configuration of an optical amplification repeater according to the fifth embodiment. In the embodiment, the control signal is transmitted directly as a power feeding current or voltage value for the optical amplification repeater, rather than supplied in the form of the signal light or the feeder line into or on which control signal is superimposed. A power-supply monitor circuit 20 detects the power-feeding current or voltage value at the power supply circuit 19 to control the excitation light source 6 according to the value. Thus the sending-end station can remotely control the repeater by changing the power-feeding current or voltage value.

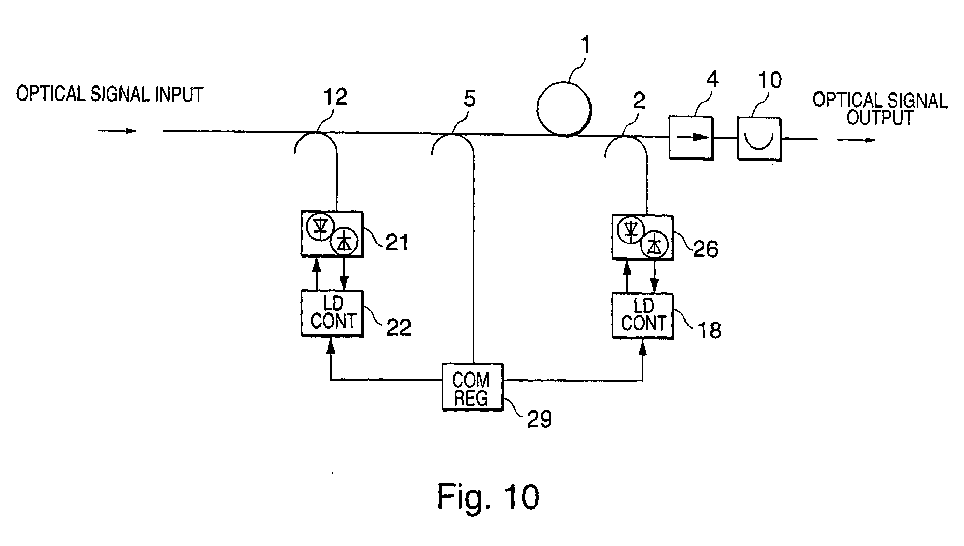

Fig. 10 is a diagram showing a configuration of an optical amplification repeater according to the sixth embodiment. This embodiment further includes, in addition to the configuration of the first embodiment, a wavelength multiplexing coupler 12 and an excitation light source 21 on the signal input side of the optical coupler 5 that branches part of the input signal light. An excitation light source 21 injects laser light in a wavelength range of 1480 nm into the optical fiber transmission line through the coupler 12 so that the fiber Raman amplification effect will be excited. Although the second embodiment of Fig. 6 has the light source 6 commonly used for exciting the Er-doped fiber 1 and the fiber Raman amplification effect in the optical fiber transmission line, the sixth embodiment of Fig. 10 separates the above-mentioned two functions by the provision of a light source 26 for exciting the Er-doped fiber 1 and the light source 21 for exciting the optical fiber transmission line. Then the control signal receiving circuit 29 extracts the control signal from the wavelength multiplexed signals input from the sending end station and branched at the optical coupler 5 to control laser driving circuits 18 and 22. Since two kinds of light sources for exciting different optical amplification are thus separated, the embodiment increases the degree of flexibility in controlling two types of amplification gains compared to the first embodiment.

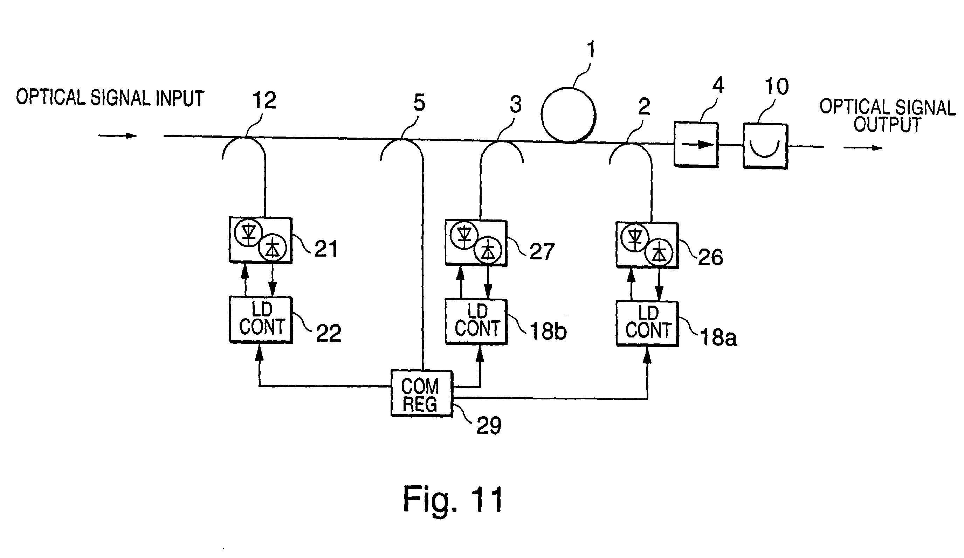

Fig. 11 is a diagram showing a configuration of an optical amplification repeater according to the seventh embodiment. This embodiment further includes, in addition to the configuration of the second embodiment shown in Fig. 6, a wavelength multiplexing coupler 12 and an excitation light source 21 on the signal input side of the optical coupler 5 that branches part of the input signal light. An excitation light source 21 injects laser light in a wavelength range of 1480 nm into the optical fiber transmission line through the coupler 12 so that the fiber Raman amplification effect will be excited. Although the second embodiment of Fig. 6 has the light source 6 commonly used for exciting the Er-doped fiber 1 and the fiber Raman amplification effect in the optical fiber transmission line, the seventh embodiment of Fig. 11 is provided with a light source 26 for backward pumping of the Er-doped fiber 1, a light source 27 for forward pumping, and the light source 21 for exciting the Raman amplification in the optical fiber transmission line, respectively. Then the control signal receiving circuit 29 extracts the control signal from the wavelength multiplexed signals input from the sending end station and branched at the optical coupler 5 to control a backward pumping-laser driving circuit 18a, a forward pumping-laser driving circuit 18b, and a laser driving circuit 22 for exciting the Raman amplification in the optical fiber transmission line. Since two kinds of light sources for exciting optical amplification are thus separated, the embodiment increases the degree of flexibility in controlling two types of amplification gains compared to the second embodiment. It should be noted that the two excitation light sources 26 and 27 for Er-doped fiber in Fig. 11 are controlled by the control signal receiving circuit 29, but only the one may be controlled by the control signal receiving circuit 29 with the other operating at a constant exciting output.

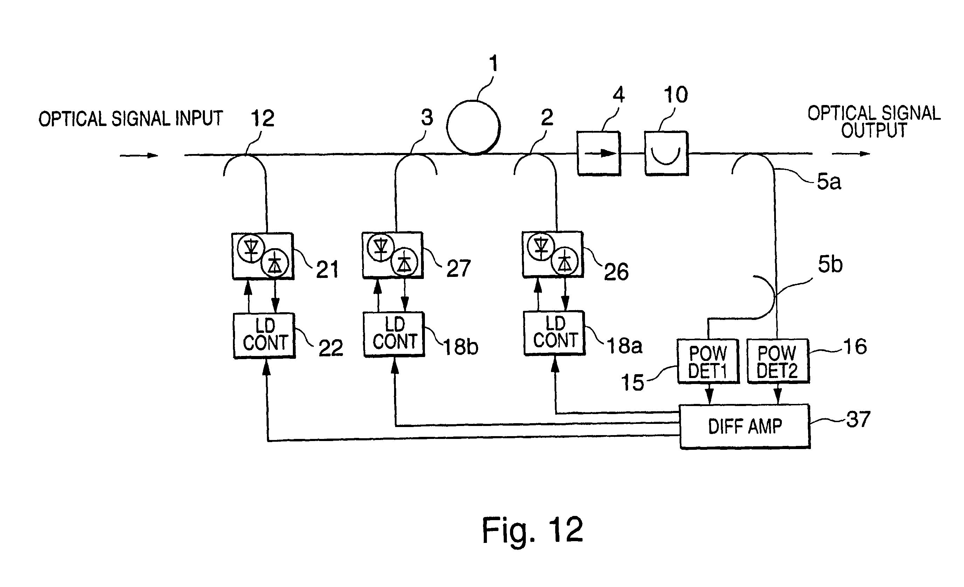

Fig. 12 is a diagram showing a configuration of an optical amplification repeater according to the eighth embodiment. This embodiment further includes, in addition to the configuration of the third embodiment shown in Fig. 7, a wavelength multiplexing coupler 12 and an excitation light source 21 on the signal input side of the wavelength multiplexing coupler 3 for use in injecting forward excitation light into the Er-doped fiber. An excitation light source 21 injects laser light in a wavelength range of 1480 nm into the optical fiber transmission line through the coupler 12 so that the fiber Raman amplification effect will be excited. Although the third embodiment of Fig. 7 has the light source 6 commonly used for exciting the Er-doped fiber 1 and the fiber Raman amplification effect in the optical fiber transmission line, the eighth embodiment of Fig. 12 is provided with a light source 26 for backward pumping of the Er-doped fiber 1, a light source 27 for forward pumping, and the light source 21 for exciting the optical fiber transmission line, respectively. The difference detection circuit 37 detects a difference of optical output level between optical signals detected by both light receiving circuits 15 and 16. Then the difference detection circuit 37 controls excitation light outputs of the backward and forward excitation light sources 26 and 27 for the Er-doped fiber 1, and the excitation light source 21 for Raman amplification. Since two kinds of light sources for exciting optical amplification are thus separated, the embodiment increases the degree of flexibility in controlling two types of amplification gains compared to the third embodiment. It should be noted that the two excitation light sources 26 and 27 for Er-doped fiber in Fig. 12 are controlled by the difference detection circuit 37, but only the one may be controlled by the difference detection circuit 37 with the other operating at a constant exciting output.

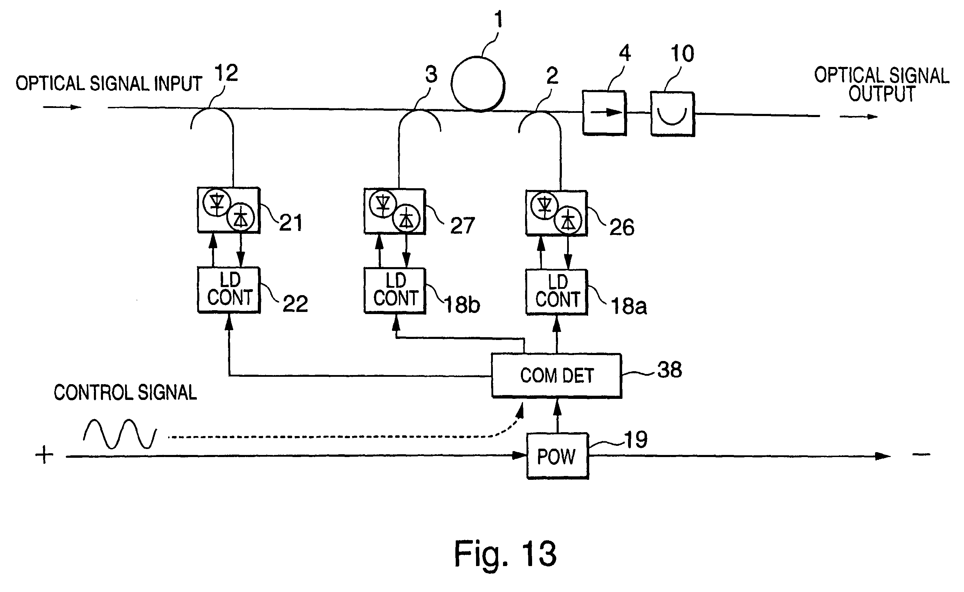

Fig. 13 is a diagram showing a configuration of an optical amplification repeater according to the ninth embodiment. This embodiment further includes, in addition to the configuration of the fourth embodiment shown in Fig. 8, a wavelength multiplexing coupler 12 and an excitation light source 21 on the signal input side of the wavelength multiplexing coupler 3 for use in injecting forward excitation light into the Er-doped fiber. An excitation light source 21 injects laser light in a wavelength range of 1480 nm into the optical fiber transmission line through the coupler 12 so that the fiber Raman amplification effect will be excited. Although the fourth embodiment of Fig. 8 has the light source 6 commonly used for exciting the Er-doped fiber 1 and the fiber Raman amplification effect in the optical fiber transmission line, the ninth embodiment of Fig. 13 is provided with a light source 26 for backward pumping of the Er-doped fiber 1, a light source 27 for forward pumping, and the light source 21 for exciting the optical fiber transmission line, respectively. The control signal receiving circuit 38 controls excitation light outputs of the backward and forward excitation light sources 26 and 27 for the Er-doped fiber 1, and the excitation light source 21 for Raman amplification. Since two kinds of light sources for exciting optical amplification are thus separated, the embodiment increases the degree of flexibility in controlling two types of amplification gains compared to the fourth embodiment. It should be noted that the two excitation light sources 26 and 27 for Er-doped fiber in Fig. 13 are controlled by the control signal receiving circuit 38, but only the one may be controlled by the control signal receiving circuit 38 with the other operating at a constant exciting output.

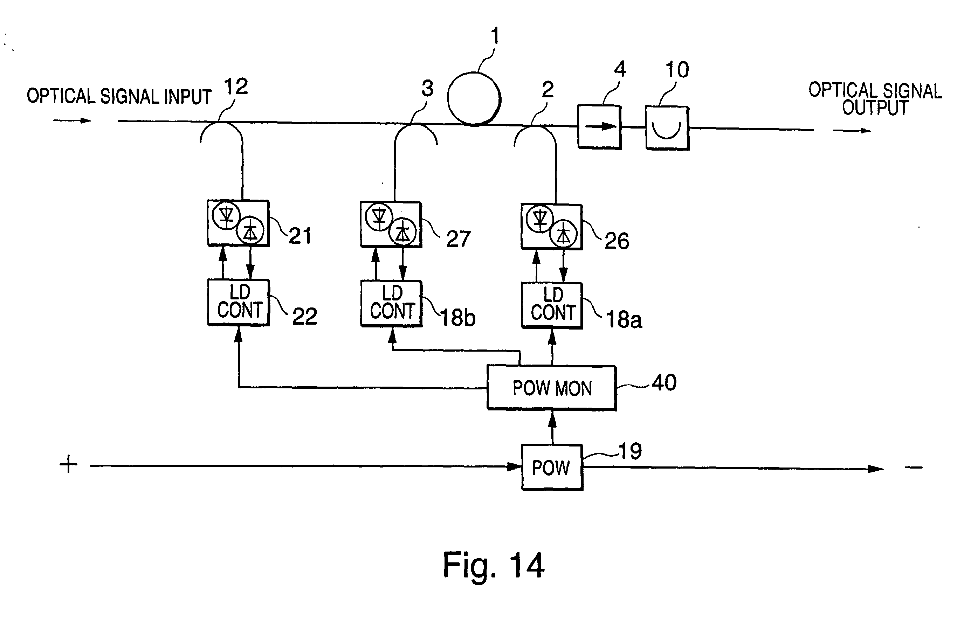

Fig. 14 is a diagram showing a configuration of an optical amplification repeater according to the tenth embodiment. This embodiment further includes, in addition to the configuration of the fifth embodiment shown in Fig. 9, a wavelength multiplexing coupler 12 and an excitation light source 21 on the signal input side of the wavelength multiplexing coupler 3 for use in injecting forward excitation light into the Er-doped fiber. An excitation light source 21 injects laser light in a wavelength range of 1480 nm into the optical fiber transmission line through the coupler 12 so that the fiber Raman amplification effect will be excited. Although the fifth embodiment of Fig. 9 has the light source 6 commonly used for exciting the Er-doped fiber 1 and the fiber Raman amplification effect in the optical fiber transmission line, the tenth embodiment of Fig. 14 is provided with a light source 26 for backward pumping of the Er-doped fiber 1, a light source 27 for forward pumping, and the light source 21 for exciting the optical fiber transmission line, respectively. The power-supply monitor circuit 40 controls excitation light outputs of the backward and forward excitation light sources 26 and 27 for the Er-doped fiber 1, and the excitation light source 21 for Raman amplification. Since two kinds of light sources for exciting optical amplification are thus separated, the embodiment increases the degree of flexibility in controlling two types of amplification gains compared to the fifth embodiment. It should be noted that the two excitation light sources 26 and 27 for Er-doped fiber in Fig. 14 are controlled by the power-supply monitor circuit 40, but only the one may be controlled by the power-supply monitor circuit 40 with the other operating at a constant exciting output.

As described above, the optical amplification repeater is so constituted that backward excitation light passing through the optical amplification medium or additional excitation light is sent out to the input side of the optical fiber transmission line in a direction opposite to the direction the signal light travels. In this configuration, excitation light launched into the optical fiber transmission line causes the Raman amplification effect in the optical fiber transmission line. The signal light is optically amplified by the Raman amplification effect in the optical fiber transmission line on the input side before being input to the optical amplification repeater. The Raman amplification serves as a pre-amplifier to the optical Er-amplification medium as the main amplifier. Control of the optical level of the excitation light provides control of the Raman amplification gain, and hence adjustment of the input level of the signal light to the optical amplification medium. The wavelength characteristic of the Raman amplification gain varies according to the level of the excitation light, while the wavelength characteristic of the gain of the optical amplification medium varies according to the input level of the signal light. If the level of the excitation light is controlled accordingly, both the optical amplification gain caused by induced emission in the optical amplification medium and the Raman amplification gain in the optical fiber transmission line can be so controlled that slopes of these amplification gains relative to wavelengths can be freely adjusted in positive and negative directions. Thus the control signal applied from the outside can control amplification gains obtained by the two types of optical amplification effects mentioned above. The two types of optical amplification effects make possible uniformity of each signal light level of the wavelength multiplexed signal light that has a slope of level relative to wavelength. Further, if the gain equalizer is arranged at the output side of the optical amplification medium, the control signal applied from the outside can flatten the total wavelength characteristic that is the sum of those of the optical amplification medium and the gain equalizer. Using any of the optical amplification repeaters according to the embodiments described to construct an optical relaying transmission system, the signal light level of each wavelength in the wavelength multiplexed signal light will be kept uniform, resulting in lending long-term stability and high quality to the wavelength multiplexed relay transmission. Any optical amplification repeaters according to the embodiments described is suitable for a long-haul, multi-relaying, advanced transmission system requiring high reliability like a submarine optical relaying system.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical amplification repeater according to the present invention includes: an optical amplification medium that optically amplifies wavelength-multiplexed signal light sent from the input side of an optical fiber transmission line to the output side of the optical fiber transmission line; an excitation light source for outputting excitation light; and a wavelength-multiplexing coupler for inputting the excitation light to the optical fiber transmission line from a direction opposite to the direction the signal light travels. Residual excitation light, after being excited the optical amplification medium, enters the input side of the optical fiber transmission line to excite the fiber Raman amplification effect. The signal light is input to the optical amplification repeater after being subjected to the Raman amplification. Thus, when the output of the excitation light is controlled, the Raman amplification varies the input level of the optical amplification medium to flatten the wavelength characteristic of the wavelength-multiplexed signal light output from the optical amplification medium.

## Claims

1. An optical direct amplification method wherein wavelength-multiplexed signal light is optically amplified by a fiber Raman optical amplification effect before being amplified by an optical amplifier using a rare-earth doped optical fiber (1) as an optical amplification medium, wherein the fiber Raman optical amplification effect occurs in an optical fiber transmission line connected to the rare-earth doped optical fiber (1) on the input side of the signal light, comprising:
detecting a level difference of plural signal light waves contained in the wavelength-multiplexed signal light optically amplified;
sending out a control signal on the basis of a detection result of the level difference, and
controlling an optical output level of an excitation light penetrating said rare-earth doped optical fiber (1) and then entering said optical fiber transmission line in a direction opposite to the direction the wavelength- multiplexed signal light travels on the basis of the control signal.

2. An optical direct amplification method as set forth in claim 1, wherein
the fiber Raman optical amplification effect and the optical amplification effect of the rare-earth doped optical fiber (1) are excited by the excitation light input to the rare-earth doped optical fiber (1) from the output side (2) the signal light.

3. An optical direct amplification method as set forth in claim 1, wherein
the fiber Raman optical amplification effect is excited by additional excitation light optical fiter transmission line from the signal input side (12) of the input to rare-earth doped optical fiber (1)
in a direction opposite to the direction the wavelength- multiplexed signal light travels, and
the optical amplification effect of the rare-earth doped optical fiber (1) is excited by the excitation light input to the rare-earth doped optical fiber (1) from the output side (2) of the signal light.

4. An optical direct amplification method as set forth in claim 1, wherein
the fiber Raman optical amplification effect is excited by additional excitation light input to the optical fiber transmission line from the signal input side (12) of the rare-earth doped optical fiber (1)
in the direction opposite to the direction the wavelenght-multiplexed signal travels ,and
the optical amplification effect of the rare-earth doped optical fiber (1) is excited by excitation light input to the rare-earth doped optical fiber (1) both from
the input side (3) of the signal light and from the output side (2) of the signal light.

5. An optical direct amplification method as set forth in claim 1, wherein
the intensity of the excitation light for exciting the fiber Raman optical amplification effect is controlled to reduce wavelength dependency of the intensity of the output light of the optical amplifier using the rare-earth doped optical fiber (1) as the optical amplification medium.

6. An optical direct amplification method as set forth in claim 5, wherein
the excitation light for the fiber Raman optical amplication effect and the rare-earth doped fiber optical amplication effect is input to the rare-earth doped optical fiber (1) from the output side (2) of the signal light.

7. An optical direct amplification method as set forth in claim 5, wherein
additional excitation light for the fiber Raman optical amplication effect is input to the optical fiber transmission line in a direction opposite to the direction the wavelength-multiplexed signal travels from the
signal output side (12) of the optical fiber transmission line.

8. An optical direct amplification method as set forth in claim 5, wherein additional excitation light for the rare-earth doped fiber optical amplication effect is input to the rare-earth doped optical fiber (1) from the
input side (3) of the signal light.

9. An optical direct amplification method as 5, wherein the intensity of the excitation light is controlled by an additional control signal, and the additional control
signal is transmitted through the optical fiber transmission line.

10. An optical direct amplification method as set forth in claim 5, wherein the intensity of the excitation light is additionally controlled by an electric control signal, and the electric control
signal is transmitted through a feeder line for an electric circuit (8a) driving the excitation light

11. An optical amplification repeater comprising:
an optical amplification medium (1) that directly amplifies wavelength-multiplexed signal light sent out from the input side of an optical fiber transmission line to the output side of said optical fiber transmission line;
a first wavelength-multiplexing coupler (2) arranged between said optical amplification medium (1) and the output side of said optical fiber transmission line, and connected to the output side of said optical amplification medium (1) so that a first excitation light wave will be coupled to said optical amplification medium (1) in a direction
opposite to the direction the wavelength-multiplexed signal light travels;
a first excitation light source (6) that emits the first excitation light wave penetrating said optical amplification medium (1) through said first wavelength-multiplexing coupler(2) and then entering the input side of said optical fiber transmission line in a direction opposite to the direction the wavelength-multiplexed signal light travels;
an optical output-level detection circuit (15, 16) arranged on the output side of said optical fiber transmission line to detect a level difference of plural signal light waves contained in the wavelength-multiplexed signal light optically amplified so as to send out a control signal on the basis of the detection result; and
an excitation-light output-level control circuit (8a) for receiving the control signal to control the optical output level of said first excitation light source (6);
whereby the repeater is configured for optical amplification of the signal light by a fiber Raman optical amplification effect at the input side of the optical fiber transmission line before amplification by the optical amplification medium.

12. An optical amplification repeater as set forth in claim 11, wherein the first excitation light wave entering the input side of said optical fiber transmission line excites the fiber Raman optical amplification effect.

13. An optical amplification repeater as set forth in claim 11, further comprising:
a second wavelength multiplexing coupler (3) arranged between the input side of said optical fiber transmission line and said optical amplification medium (1) so that a second excitation light wave is synthesized or multiplexed into the wavelength multiplexed signal light; and,
a second excitation light source (7) for exciting said optical amplification medium (1) through said second wavelength multiplexing coupler (3).

14. An optical amplification repeater as set forth in claim 13, further comprising:
an optical directional coupler(5) arranged between the input side of said optical fiber transmission line and said second wavelength multiplexing coupler (3) so that part of the wavelength multiplexed signal light will be branched; and,
a control signal receiving circuit (9) connected to said optical directional coupler (5) so that an additional control signal contained in the wavelength multiplexed signal light will be extracted and sent out to said excitation-light output control circuit (8a).

15. An optical amplification repeater as set forth in claim 11, wherein
the wavelength multiplexed signal light has wavelengths in a wavelength range of 1550 nm, and
output light wavelengths of said first excitation light source (6) are in a wavelength range of 1480 nm.

16. An optical amplification repeater as set forth in claim 11, wherein said excitation-light output level control circuit (8a) includes a memory for storing a relationship between level difference of the two kinds of signal light and driving current to be applied to said first excitation light source (6); and further comprising a driving current setting circuit for selecting driving current to be applied to said first excitation light source from among the driving current values stored in said memory on the basis of the level difference of two kinds of signal light.

17. An optical amplification repeater as set forth in claim 11, further comprising
an excitation-light output control circuit (18), connected to a feeder line that provides power for said optical amplification repeater, for receiving an electric control signal transmitted from the feeder line to control the optical output of said first excitation light source (6).

18. An optical amplification repeater as set forth in claim 11, further comprising:
a second wavelength multiplexing coupler (3) arranged between the input side of said optical fiber transmission line and said optical amplification medium (1) so that a second excitation light wave is coupled to the input side of said optical fiber transmission line in a direction the same as the direction the wavelength multiplexed signal light travels; and
a second excitation light source (7) that emits the second excitation light wave to be coupled to the input side of said optical fiber transmission line through said second wavelength multiplexing coupler (3).

19. An optical amplification repeater as set forth in claim 18, wherein the first excitation light wave entering the input side of said optical fiber transmission line excites the fiber Raman optical amplification effect.

20. An optical amplification repeater as set forth in claim 11 .or 18, further comprising:
an optical directional coupler (5) arranged between the input side of said optical fiber transmission line and said optical amplification medium (1) for branching part of the wavelength multiplexed signal light; and,
a control signal receiving circuit (9, 29) connected to said optical directional coupler (5) so that an additional control signal contained in the wavelength
multiplexed signal light is extracted and sent out to said excitation-light output control circuit (8a, 18, 22)..

21. An optical amplification repeater as set forth in claim 18, further comprising:
a third wavelength multiplexing coupler (12) arranged between the input side of said optical fiber transmission line and said optical amplification medium (1) so that a third excitation light wave is synthesized or multiplexed into the wavelength multiplexed signal light in a direction opposite to the direction the wavelenght multiplexed signal light travels; and
a third excitation light source(21) for exciting said
fiber Raman optical amplification effect through said third wavelength multiplexing coupler (12).

22. An optical amplification repeater as set forth in claim 21, further comprising:
an optical directional coupler (5) arranged between the input side of said optical fiber transmission line and said second wavelength multiplexing coupler(3) so that part of the wavelength multiplexed signal light will be branched; and
a control signal receiving circuit (29) connected to said optical directional coupler (5) so that an additional control signal contained in the wavelength multiplexed signal light will be extracted and sent out to said excitation-light output control circuit (18a, 18b, 22).

23. An optical amplification repeater as set forth in claim 18, wherein
the wavelength multiplexed signal light has wavelengths in a wavelength range of 1550 nm,
and output light wavelengths of both said first and said second excitation light source (7) are in a wavelength range of 1480 nm.

24. An optical amplification repeater as set forth in claim 14, 20 or 22, wherein the wavelength multiplexed signa light is subjected to amplitude, frequency or phase modulation on the basis if the additional control signal.

25. An optical amplification repeater as set forth in claim 11 or 18, further comprising an optical isolator (4) arranged between said first wavelength multiplexing coupler (2) and the output side of said optical fiber transmission line so as to pass light waves traveling toward the output side of said optical fiber while shutting out light waves travelling in the opposite direction.

26. An optical amplification repeater as set forth in claim 11 or 18, further comprising an equalizer (10) arranged between said first wavelength multiplexing coupler (2) and the output side of said optical fiber transmission line so as to reduce variations in the optical output level of the wavelength multiplexed signal light output from said optical amplification medium (1).

27. An optical amplification repeater as set forth in claim 11, wherein said optical output-level detection circuit further includes
an optical directional coupler (5a) for branching part of the wavelength multiplexed signal light optically amplified and outputting the branched light waves of the wavelength multiplexed signal light;
an optical splitter (5b) for splitting the wavelength multiplexed signal light into two kinds of de-multiplexed light and outputting the same; and
a control signal output circuit (17) for sending out the control signal according to the level difference of the two kinds of de-multiplexed light.

28. An optical amplification repeater as set forth in claim 27, wherein the two kinds of de-multiplexed light are two signals of light with certain wavelengths selected beforehand from among all the wavelengths contained in the wavelength multiplexed signal light output from said optical amplification medium (1).

29. An optical amplification repeater as set forth in claim 28, wherein said excitation-light output-level control circuit includes
a memory for storing a relationship between level difference of the two kinds of signal light and driving current to be applied to said first excitation light source (6) ; and
a driving current setting circuit for selecting driving current to be applied to said first excitation light source from among the driving current values stored in said memory on the basis of the level difference of two kinds of signal light.

30. An optical amplification repeater as set forth in claim 18, further comprising
an excitation-light output control circuit (38), connected to a feeder line
that provides power for said optical amplification repeater, for receiving an electric control signal transmitted from the feeder line to control the optical outputs of said first excitation light source (26) and of said second excitation light source (27).

31. An optical amplification repeater as set forth in claim 17 or 30, wherein the electric control signal is an electric signal superimposed on the power supplied through
said feeder line.

32. An optical amplification repeater as set forth in claim 17 or 30, wherein the electric control signal is a voltage or current value of the power supplied through said feeder line.

33. An optical transmission system comprising: a plurality of optical amplification repeaters as set forth in claim 11, further comprising:
a light sending-end station at which an optical transmitter is provided for sending out the wavelength-multiplexed signal light with wavelengths different from one another;
a light receivjng-end station at which an optical receiver is provided for receiving the amplified wavelength multiplexed signal light to convert each signal light component into an electric signal; and
optical fiber transmission lines for connections between said light sending-end station and the first optical amplification repeater, between said optical amplification repeaters, and between the last optical amplification repeater and said light receiving-end station, respectively.

34. An optical transmission system as set forth in claim 33, wherein each of said optical amplification repeaters further includes
a second wavelength multiplexing coupler(3) arranged between the input
side of said optical fiber transmission line and said optical amplification medium (1) so that a second excitation light wave is synthesized or multiplexed into the wavelength multiplexed signal light; and
a second excitation light source (7) for exciting said optical amplification medium (1) through said second wavelength multiplexing coupler (3).

35. An optical transmission system as set forth in claim 34, wherein each of said optical amplification repeaters further includes
an optical directional coupler (5) arranged between the input side of said optical fiber transmission line and said second wavelength multiplexing coupler (3) so that part of the wavelength multiplexed signal light will be branched; and
a control signal receiving circuit (9) connected to said optical directional coupler (5) so that an additional control signal contained in the wavelength multiplexed signal light will be extracted and sent out to said excitation-light output control circuit (8a).

36. An optical transmission system as set forth in claim 33, wherein
the wavelength multiplexed signal light has wavelengths in a wavelength range of 1550 nm, and
output light wavelengths of said first excitation light source (6) are in a wavelength range of 1480 nm.

37. An optical transmission system, comprising a plurality of optical amplification repeaters as set forth in claim 18, further comprising:
a light receiving-end station at which an optical receiver is provided for receiving the wavelength multiplexed signal light to convert each signal light component into an electric signal; and
optical fiber transmission lines for connections between said light sending-end station and the first optical amplification repeater, between said optical amplification repeaters, and between the last optical amplification repeater and said light receiving-end station, respectively.

38. An optical transmission system as set forth in claim 33 or 37, wherein the first excitation light wave entering the input side of said optical fiber transmission line excites the
fiber Raman optical amplification effect.

39. An optical transmission system as set forth in claim 33 or 37 , wherein each of said optical amplification repeaters further includes
an optical directional coupler (5) arranged between the input side of said optical fiber transmission line and said optical amplification medium (1) so that part of the wavelength multiplexed signal light will be branched; and
a control signal receiving circuit (9, 29) connected to said optical directional coupler (5) so that an additional control signal contained in the wavelength multiplexed signal light will be extracted and sent out to said excitation-light output control circuit (8a, 18a).

40. An optical transmission system as set forth in claim 37, wherein each of said optical amplification repeaters further includes
a third wavelength multiplexing coupler (12) arranged between the input side of said optical fiber transmission line and said optical amplification medium (1) so that a third excitation light wave is synthesized pr multiplexed into the wavelength multiplexed signal light in the opposite direction to the direction the wavelength-multiplexed signal light travels; and
a third excitation light source (21) for exciting said fiber Raman optical amplification effect through said third wavelength multiplexing coupler (12).

41. An optical transmission system as set forth in claim 40, wherein each of said optical amplification repeaters further includes
an optical directional coupler (5) arranged between the input side of said optical fiber transmission line and said second wavelength multiplexing coupler (3) so that part of the wavelength multiplexed signal light will be branched; and
a control signal receiving circuit (29) connected to said optical directional coupler(5) so that an additional control signal contained in the wavelength multiplexed signal light will be extracted and sent out to said excitation-light output control circuit (18a).

42. An optical transmission system as set forth in claim 37, wherein
the wavelength multiplexed signal light has wavelengths in a wavelength range of 1550 nm, and
output light wavelengths of both said first excitation light source (6) and said second excitation light source (7) are in a wavelength range of 1480 nm.

43. An optical transmission system as set forth in claim 35, 39 or 41, wherein the wavelength multiplexed signal light is subjected to amplitude, frequency or phase modulation on the basis of the additional control signal.

44. An optical transmission system as set forth in claim 34 or 38, wherein each of said optical amplification repeaters further includes
an optical isolator (4) arranged between said first wavelength multiplexing coupler (2) and the output side of said optical fiber transmission line so as to pass light waves travelling toward the output side of said optical fiber while shutting out light waves travelling in the opposite direction.

45. An optical transmission system as set forth in claim 33 or 37, wherein each of said optical amplification repeaters further includes
an equalizer (10) arranged between said first wavelength multiplexing coupler (2) and the output side of said optical fiber transmission line so as to reduce variations in the optical output level the wavelength multiplexed signal light output from said optical amplification medium (1).

46. An optical transmission system as set forth in claim 33 or 37, wherein said optical output-level detection circuit includes
an optical directional coupler (5a) for branching part of the wavelength multiplexed signal light optically amplified and outputting the branched light waves of the wavelength multiplexed signal light;
an optical splitter for splitting (5b) the wavelength multiplexed signal light into two kinds of de-multiplexed light and outputting the same; and
a control signal output circuit (17) for sending out the control signal according to the level difference of the two kinds of de-multiplexed light.

47. An optical transmission system as set forth in claim 46, wherein the two kinds of de-multiplexed light are two signals of light with certain wavelengths selected beforehand from among all the wavelengths contained in the wavelength multiplexed signal light output from said optical amplification medium (1).

48. An optical transmission system as set forth in claim 33 or 37, wherein said excitation-light output-level control circuit includes
a memory for storing a relationship between level difference of the two kinds of signal light and driving current to be applied to said first excitation light source (6); and
a driving current setting circuit for selecting driving current to be applied to said first excitation light source from among the driving current values stared in said
memory on the basis of the level difference of two kinds of signal light.

49. An optical transmission system as set forth in claim 33 or 37, wherein each of said optical amplification repeaters further includes
an excitation-light output control circuit (8a, 18a), connected to a feeder line that provides power for said optical amplification repeater, for receiving an electric control signal transmitted from the feeder line to control the optical output of said first excitation light source (6, 26).

50. An optical transmission system as set forth in claim 49, wherein the electric control signal is an electric signal superimposed on the power supplied through
said feeder line.

51. An optical transmission system as set forth in claim 50, wherein the electric control signal is a voltage or current value of the power supplied through said feeder line.

## Patentansprüche

1. Verfahren zur optischen Direktverstärkung, wobei ein wellenlängen-multiplexiertes Signallicht optisch verstärkt wird durch einen faseroptischen Raman-Verstärkungs-Effekt, bevor es durch einen optischen Verstärker verstärkt wird, eine Seltene-Erden-dotierte optische Faser (1) als ein optisches Verstärkungsmedium verwendend, wobei der faseroptische Raman-Verstärkungs-Effekt in einer optischen Faser-Übertragungsleitung auftritt, die mit der Seltene-Erden-dotierten optischen Faser (1) verbunden ist, an der Input-Seite des Signallichts, das Folgendes aufweist:
Detektieren einer Level-Differenz von Vielfach-Signallichtwellen, enthalten in dem wellenlängen-multiplexierten Signallicht, das optisch verstärkt ist;
Aussenden eines Steuersignals auf der Basis eines Detektionsergebnisses der Level-Differenz; und
Steuern eines optischen Output-Levels eines Anregungslichts, das die Seltene-Erden-dotierte optische Faser (1) durchdringt, und dann in die optische Faser-Übertragungsleitung eintritt, in einer Richtung entgegengesetzt zu der Richtung, in der das wellenlängen-multiplexierte Signallicht läuft, auf der Basis des Steuersignals.

2. Verfahren zur optischen Direktverstärkung nach Anspruch 1, wobei der faseroptische Raman-Verstärkungs-Effekt und der optische Verstärkungseffekt der Seltene-Erden-dotierten optischen Faser (1) angeregt werden durch das Anregungslicht, das der Seltene-Erden-dotierten optischen Faser (1) von der Output-Seite (2) des Signallichts zugeführt wird.

3. Verfahren zur optischen Direktverstärkung nach Anspruch 1, wobei der faseroptische Raman-Verstärkungs-Effekt angeregt wird durch ein zusätzliches Anregungslicht, das der optischen Faser-Übertragungsleitung von der Signal-Input-Seite (12) der Seltene-Erden-dotierten optischen Faser (1) zugeführt wird, in einer Richtung entgegengesetzt zu der Richtung, in der das wellenlängen-multiplexierte Signallicht läuft, und
der optische Verstärkungseffekt der Seltene-Erden-dotierten optischen Faser (1) angeregt wird durch das Anregungslicht, das der Seltene-Erden-dotierten optischen Faser (1) von der Output-Seite (2) des Signallichts zugeführt wird.

4. Verfahren zur optischen Direktverstärkung nach Anspruch 1, wobei der faseroptische Raman-Verstärkungs-Effekt angeregt wird durch ein zusätzliches Anregungslicht, das der optischen Faser-Übertragungsleitung von der Signal-Input-Seite (12) der Seltene-Erden-dotierten optischen Faser (1) zugeführt wird, in einer Richtung entgegengesetzt zu der Richtung, in der das wellenlängen-multiplexierte Signal läuft, und
der optische Verstärkungseffekt der Seltene-Erden-dotierten optischen Faser (1) angeregt wird durch ein Anregungslicht, das der Seltene-Erden-dotierten optischen Faser (1) zugeführt wird, sowohl von der Input-Seite (3) des Signallichts, als auch von der Output-Seite (2) des Signallichts.

5. Verfahren zur optischen Direktverstärkung nach Anspruch 1, wobei die Intensität des Anregungslichts zum Anregen des faseroptischen Raman-Verstärkungs-Effekts gesteuert wird, um eine Wellenlängenabhängigkeit von der Intensität des Output-Lichts des optischen Verstärkers zu reduzieren, eine Seltene-Erden-dotierte optische Faser (1) als das optische Verstärkungsmedium verwendend.

6. Verfahren zur optischen Direktverstärkung nach Anspruch 5, wobei das Anregungslicht für den faseroptischen Raman-Verstärkungs-Effekt und den Seltene-Erden-dotierte Faser-optische Verstärkung-Effekt zugeführt wird zu der Seltene-Erden-dotierten optischen Faser (1) von der Output-Seite (2) des Signallichts.

7. Verfahren zur optischen Direktverstärkung nach Anspruch 5, wobei das zusätzliche Anregungslicht für den faseroptischen Raman-Verstärkungs-Effekt zugeführt wird zu der optischen Faser-Übertragungsleitung, in einer Richtung entgegengesetzt zu der Richtung, in der das wellenlängen-multiplexierte Signal läuft, von der Signal-Output-Seite (12) der optischen Faser-Übertragungsleitung.

8. Verfahren zur optischen Direktverstärkung nach Anspruch 5, wobei das zusätzliche Anregungslicht für den Seltene-Erden-dotierte Faser-optische Verstärkung-Effekt zugeführt wird zu der Seltene-Erden-dotierten optischen Faser (1) von der Input-Seite (3) des Signallichts.

9. Verfahren zur optischen Direktverstärkung nach Anspruch 5, wobei die Intensität des Anregungslichts durch ein zusätzliches Steuersignal gesteuert wird und das zusätzliche Steuersignal durch die optische Faser-Übertragungsleitung übermittelt wird.

10. Verfahren zur optischen Direktverstärkung nach Anspruch 5, wobei die Intensität des Anregungslichts zusätzlich durch ein elektrisches Steuersignal gesteuert wird und das elektrische Steuersignal durch eine Zuführleitung für einen elektrischen Schaltkreis (8a), übermittelt wird, das Anregungslicht ansteuernd.

11. Optischer Verstärkungs-Repeater, der Folgendes aufweist:
ein optisches Verstärkungsmedium (1), das ein wellenlängen-multiplexiertes Signallicht, das von der Input-Seite einer optischen Faser-Übertragungsleitung ausgesendet wird zu der Output-Seite der optischen Faser-Übertragungsleitung, direkt verstärkt;
einen ersten Wellenlängen-Multiplex-Koppler (2), der zwischen dem optischen Verstärkungsmedium (1) und der Output-Seite der optischen Faser-Übertragungsleitung angeordnet ist und mit der Output-Seite des optischen Verstärkungsmediums (1) verbunden ist, so dass eine erste Anregungslichtwelle mit dem optischen Verstärkungsmedium (1) gekoppelt wird, in einer Richtung entgegengesetzt zu der Richtung, in der das wellenlängen-multiplexierte Signallicht läuft;
eine erste Anregungslichtquelle (6), die die erste Anregungslichtwelle emittiert, die das optische Verstärkungsmedium (1) durchdringt, durch den ersten Wellenlängen-Multiplex-Koppler (2) und dann in die Input-Seite der optischen Faser-Übertragungsleitung eintritt, in einer Richtung entgegengesetzt zu der Richtung, in der das wellenlängen-multiplexierte Signallicht läuft;
einen optischen Output-Level-Detektions-Schaltkreis (15, 16), der an der Output-Seite der optischen Faser-Übertragungsleitung angeordnet ist, um eine Level-Differenz von Vielfach-Signallichtwellen zu detektieren, enthalten in dem wellenlängen-multiplexierten Signallicht, das optisch verstärkt ist, so dass ein Steuersignal auf der Basis des Detektionsergebnisses ausgesendet wird; und
ein Anregungslicht-Output-Level-Steuerschaltkreis (8a) zum Empfangen des Steuersignals, um den optischen Output-Level der ersten Anregungslichtquelle (6) zu steuern;
wobei der Repeater ausgebildet ist zur optischen Verstärkung des Signallichts durch einen faseroptischen Raman-Verstärkungs-Effekt an der Input-Seite der optischen Faser-Übertragungsleitung, vor der Verstärkung durch das optische Verstärkungsmedium.

12. Optischer Verstärkungs-Repeater nach Anspruch 11, wobei die erste Anregungslichtwelle, die in die Input-Seite der optischen Faser-Übertragungsleitung eintritt, den faseroptischen Raman-Verstärkungs-Effekt anregt.

13. Optischer Verstärkungs-Repeater nach Anspruch 11, der ferner aufweist:
einen zweiten Wellenlängen-Multiplex-Koppler (3), der zwischen der Input-Seite der optischen Faser-Übertragungsleitung und dem optischen Verstärkungsmedium (1) angeordnet ist, so dass eine zweite Anregungslichtwelle synthetisiert oder mulitplexiert wird in das wellenlängen-multiplexierte Signallicht; und
eine zweite Anregungslichtquelle (7) zum Anregen des optischen Verstärkungsmediums (1) durch den zweiten Wellenlängen-Multiplex-Koppler (3).

14. Optischer Verstärkungs-Repeater nach Anspruch 13, der ferner aufweist:
einen optischen gerichteten Koppler (5), der zwischen der Input-Seite der optischen Faser-Übertragungsleitung und dem zweiten Wellenlängen-Multiplex-Koppler (3) angeordnet ist, so dass ein Teil des wellenlängen-multiplexierten Signallichts verzweigt wird; und
einen Steuersignal-Empfang-Schaltkreis (9), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (8a) ausgesendet wird.

15. Optischer Verstärkungs-Repeater nach Anspruch 11, wobei das wellenlängen-multiplexierte Signallicht Wellenlängen in einem Wellenlängenbereich von 1550 nm hat und
Output-Licht-Wellenlängen der ersten Anregungslichtquelle (6) in einem Wellenlängenbereich von 1480 nm liegen.

16. Optischer Verstärkungs-Repeater nach Anspruch 11, wobei der Anregungslicht-Output-Level-Steuerschaltkreis (8a) einen Speicher zum Speichern einer Beziehung zwischen der Level-Differenz von den zwei Arten von Signallicht umfasst und Ansteuerstrom, zum Zuführen an die erste Anregungslichtquelle (6); und ferner einen Ansteuerstrom-Setting-Schaltkreis aufweist, zum Auswählen eines Ansteuerstroms zum Zuführen zu der ersten Anregungslichtquelle, aus den Ansteuerstromwerten, die in dem Speicher gespeichert sind, auf der Basis der Level-Differenz von zwei Arten von Signallicht.

17. Optischer Verstärkungs-Repeater nach Anspruch 11, der ferner aufweist:
einen Anregungslicht-Output-Steuerschaltkreis (18), der mit einer Zuführleitung verbunden ist, was Energie für den optischen Verstärkungs-Repeater zur Verfügung stellt, zum Empfangen eines elektrischen Steuersignals, das von der Zuführleitung übertragen wird, um den optischen Output der ersten Anregungslichtquelle (6) zu steuern.

18. Optischer Verstärkungs-Repeater nach Anspruch 11, der ferner aufweist:
einen zweiten Wellenlängen-Multiplex-Koppler (3), der zwischen der Input-Seite der optischen Faser-Übertragungsleitung und dem optischen Verstärkungsmedium (1) angeordnet ist, so dass eine zweite Anregungslichtwelle gekoppelt wird mit der Input-Seite der optischen Faser-Übertragungsleitung in einer Richtung, entsprechend der Richtung, in der das wellenlängen-multiplexierte Signallicht läuft; und
eine zweite Anregungslichtquelle (7), die die zweite Anregungslichtwelle emittiert, zum Koppeln mit der Input-Seite der optischen Faser-Übertragungsleitung, durch den zweiten Wellenlängen-Multiplex-Koppler (3).

19. Optischer Verstärkungs-Repeater nach Anspruch 18, wobei die erste Anregungslichtwelle, die in die Input-Seite der optischen Faser-Übertragungsleitung eintritt, den faseroptischen Raman-Verstärkungs-Effekt anregt.

20. Optischer Verstärkungs-Repeater nach Anspruch 11 oder 18, der ferner aufweist:
einen optischen gerichteten Koppler (5), der zwischen der Input-Seite der optischen Faser-Übertragungsleitung und dem optischen Verstärkungsmedium (1) angeordnet ist, zum Verzweigen eines Teils des wellenlängen-multiplexiertes Signallichts; und
einen Steuersignal-Empfang-Schaltkreis (9, 29), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (8a, 18, 22) ausgesendet wird.

21. Optischer Verstärkungs-Repeater nach Anspruch 18, der ferner aufweist:
einen dritten Wellenlängen-Multiplex-Koppler (12), der zwischen der Input-Seite der optischen Faser-Übertragungsleitung und dem optischen Verstärkungsmedium (1) angeordnet ist, so dass eine dritte Anregungslichtwelle synthetisiert oder mulitplexiert wird in das wellenlängen-multiplexierte Signallicht, in einer Richtung entgegengesetzt zu der Richtung, in der das wellenlängen-multiplexierte Signallicht läuft; und
eine dritte Anregungslichtquelle (21) zum Anregen des faseroptischen Raman-Verstärkungs-Effekts durch den dritten Wellenlängen-Multiplex-Koppler (12).

22. Optischer Verstärkungs-Repeater nach Anspruch 21, der ferner aufweist:
einen optischen gerichteten Koppler (5), der zwischen der Input-Seite der optischen Faser-Übertragungsleitung und dem zweiten Wellenlängen-Multiplex-Koppler (3) angeordnet ist, so dass ein Teil des wellenlängen-multiplexierten Signallichts verzweigt wird; und
einen Steuersignal-Empfang-Schaltkreis (29), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (18a, 18b, 22) ausgesendet wird.

23. Optischer Verstärkungs-Repeater nach Anspruch 18, wobei das wellenlängen-multiplexierte Signallicht Wellenlängen in einem Wellenlängenbereich von 1550 nm hat und
Output-Licht-Wellenlängen von beiden, der ersten und der zweiten Anregungslichtquelle (6), in einem Wellenlängenbereich von 1480 nm liegen.

24. Optischer Verstärkungs-Repeater nach Anspruch 14, 20 oder 22, wobei das wellenlängen-multiplexierte Signallicht auf Amplitude, Frequenz oder Phasenmodulation auf der Basis des zusätzlichen Steuersignals gerichtet ist.

25. Optischer Verstärkungs-Repeater nach Anspruch 11 oder 18, der ferner einen optischen Isolator (4) aufweist, der zwischen dem ersten Wellenlängen-Multiplex-Koppler (2) und der Output-Seite der optischen Faser-Übertragungsleitung angeordnet ist, um Lichtwellen durchzuführen, die in Richtung der Output-Seite der optischen Faser laufen, während Lichtwellen, die in die entgegengesetzte Richtung laufen, ausgeschlossen werden.

26. Optischer Verstärkungs-Repeater nach Anspruch 11 oder 18, der ferner einen Equalizer (10) aufweist, der zwischen dem ersten Wellenlängen-Multiplex-Koppler (2) und der Output-Seite der optischen Faser-Übertragungsleitung angeordnet ist, um Variationen in dem optischen Output-Level des wellenlängen-multiplexierten Signallichts zu reduzieren, ausgegeben von dem optischen Verstärkungsmedium (1).

27. Optischer Verstärkungs-Repeater nach Anspruch 11, wobei der optische Output-Level-Detektions-Schaltkreis ferner umfasst:
einen optischen gerichteten Koppler (5a) zum Verzweigen eines Teils des wellenlängen-multiplexierten Signallichts, das optisch verstärkt ist und Ausgeben der verzweigten Lichtwellen des wellenlängen-multiplexierten Signallichts;
einen optischen Splitter (5b) zum Splitten des wellenlängen-multiplexierten Signallichts in zwei Arten von de-multiplexiertem Licht und Ausgeben desselben; und
einen Steuersignal-Output-Schaltkreis (17) zum Aussenden des Steuersignals gemäß der Level-Differenz der zwei Arten des de-multiplexierten Lichts.

28. Optischer Verstärkungs-Repeater nach Anspruch 27, wobei die zwei Arten des de-multiplexierten Lichts zwei Signale eines Lichts mit bestimmten Wellenlängen sind, zuvor ausgewählt aus all den Wellenlängen, die in dem wellenlängen-multiplexierten Signallicht enthalten sind, ausgegeben von dem optischen Verstärkungsmedium.

29. Optischer Verstärkungs-Repeater nach Anspruch 28, wobei der Anregungslicht-Output-Level-Steuerschaltkreis Folgendes umfasst:
einen Speicher zum Speichern einer Beziehung zwischen einer Level-Differenz von den zwei Arten von Signallicht und Ansteuerstrom, zum Zuführen an die erste Anregungslichtquelle (6); und
einen Ansteuerstrom-Setting-Schaltkreis zum Auswählen eines Ansteuerstroms zum Zuführen zu der ersten Anregungslichtquelle, aus den Ansteuerstromwerten, die in dem Speicher gespeichert sind, auf der Basis der Level-Differenz von zwei Arten von Signallicht.

30. Optischer Verstärkungs-Repeater nach Anspruch 18, der ferner aufweist:
einen Anregungslicht-Output-Steuerschaltkreis (38), der mit einer Zuführleitung verbunden ist, was Energie für den optischen Verstärkungs-Repeater zur Verfügung stellt, zum Empfangen eines elektrischen Steuersignals, das von der Zuführleitung übertragen wird, um die optischen Outputs der ersten Anregungslichtquelle (26) und
der zweiten Anregungslichtquelle (27) zu steuern.

31. Optischer Verstärkungs-Repeater nach Anspruch 17 oder 30, wobei das elektrische Steuersignal ein elektrisches Signal ist, das der Energie hinzugefügt ist, zugeführt durch die Zuführleitung.

32. Optischer Verstärkungs-Repeater nach Anspruch 17 oder 30, wobei das elektrische Steuersignal ein Spannungs- oder Stromwert der Energie ist, zugeführt durch die Zuführleitung.

33. Optisches Übertragungssystem, das Folgendes aufweist:
eine Vielzahl von optischen Verstärkungs-Repeatern nach Anspruch 11, ferner aufweisend:
eine Licht-sendende Endstation, an welcher ein optischer Transmitter zum Aussenden des wellenlängen-multiplexierten Signallichts mit Wellenlängen, die unterschiedlich voneinander sind, vorgesehen ist;
eine Licht-empfangende Endstation, an welcher ein optischer Receiver zum Empfangen des verstärkten wellenlängen-multiplexierten Signallichts vorgesehen ist, um jede Signallichtkomponente in ein elektrisches Signal zu konvertieren; und
optische Faser-Übertragungsleitungen für Verbindungen zwischen der Lichtsendenden Endstation und dem ersten optischen Verstärkungs-Repeater, zwischen den optischen Verstärkungs-Repeatern bzw. zwischen dem letzten optischen Verstärkungs-Repeater und der Licht-empfangende Endstation.

34. Optisches Übertragungssystem nach Anspruch 33, wobei jeder der optischen Verstärkungs-Repeater ferner umfasst:
einen zweiten Wellenlängen-Multiplex-Koppler (3), der zwischen der Input-Seite der optischen Faser-Übertragungsleitung und dem optischen Verstärkungsmedium (1) angeordnet ist, so dass eine zweite Anregungslichtwelle synthetisiert oder mulitplexiert wird in das wellenlängen-multiplexierte Signallicht; und
eine zweite Anregungslichtquelle (7) zum Anregen des optischen Verstärkungsmediums (1) durch den zweiten Wellenlängen-Multiplex-Koppler (3).

35. Optisches Übertragungssystem nach Anspruch 34, wobei jeder der optischen Verstärkungs-Repeater ferner umfasst:
einen optischen gerichteten Koppler (5), der zwischen der Input-Seite der optischen Faser-Übertragungsleitung und dem zweiten Wellenlängen-Multiplex-Koppler (3) angeordnet ist, so dass ein Teil des wellenlängen-multiplexierten Signallichts verzweigt wird; und
einen Steuersignal-Empfang-Schaltkreis (9), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (8a) ausgesendet wird.

36. Optisches Übertragungssystem nach Anspruch 33, wobei das wellenlängen-multiplexierte Signallicht Wellenlängen in einem Wellenlängenbereich von 1550 nm hat und
Output-Licht-Wellenlängen der ersten Anregungslichtquelle (6) in einem Wellenlängenbereich von 1480 nm liegen.

37. Optisches Übertragungssystem, das eine Vielzahl von optischen Verstärkungs-Repeatern nach Anspruch 18 aufweist, ferner aufweisend:
eine Licht-empfangende Endstation, an welcher ein optischer Receiver zum Empfangen des wellenlängen-multiplexierten Signallichts vorgesehen ist, um jede Signallichtkomponente in ein elektrisches Signal zu konvertieren; und
optische Faser-Übertragungsleitungen für Verbindungen zwischen der Lichtsendenden Endstation und dem ersten optischen Verstärkungs-Repeater, zwischen den optischen Verstärkungs-Repeatern bzw. zwischen dem letzten optischen Verstärkungs-Repeater und der Licht-empfangende Endstation.

38. Optisches Übertragungssystem nach Anspruch 33 oder 37, wobei die erste Anregungslichtwelle, die in die Input-Seite der optischen Faser-Übertragungsleitung eintritt, den faseroptischen Raman-Verstärkungs-Effekt anregt.

39. Optisches Übertragungssystem nach Anspruch 33 oder 37, wobei jeder der optischen Verstärkungs-Repeater ferner umfasst:
einen optischen gerichteten Koppler (5), der zwischen der Input-Seite der optischen Faser-Übertragungsleitung und dem optischen Verstärkungsmedium (1) angeordnet ist, so dass ein Teil des wellenlängen-multiplexierten Signallichts verzweigt wird; und
einen Steuersignal-Empfang-Schaltkreis (9, 29), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (8a, 18a) ausgesendet wird.

40. Optisches Übertragungssystem nach Anspruch 37, wobei jeder der optischen Verstärkungs-Repeater ferner umfasst:
einen dritten Wellenlängen-Multiplex-Koppler (12), der zwischen der Input-Seite der optischen Faser-Übertragungsleitung und dem optischen Verstärkungsmedium (1) angeordnet ist, so dass eine dritte Anregungslichtwelle synthetisiert oder mulitplexiert wird in das wellenlängen-multiplexierte Signallicht, in der entgegengesetzten Richtung zu der Richtung, in der das wellenlängen-multiplexierte Signallicht läuft; und
eine dritte Anregungslichtquelle (21) zum Anregen des faseroptischen Raman-Verstärkungs-Effekts durch den dritten Wellenlängen-Multiplex-Koppler (12).

41. Optisches Übertragungssystem nach Anspruch 40, wobei jeder der optischen Verstärkungs-Repeater ferner umfasst:
einen optischen gerichteten Koppler (5), der zwischen der Input-Seite der optischen Faser-Übertragungsleitung und dem zweiten Wellenlängen-Multiplex-Koppler (3) angeordnet ist, so dass ein Teil des wellenlängen-multiplexierten Signallichts verzweigt wird; und
einen Steuersignal-Empfang-Schaltkreis (29), der mit dem optischen gerichteten Koppler (5) verbunden ist, so dass ein zusätzliches Steuersignal, das in dem wellenlängen-multiplexierten Signallicht enthalten ist, extrahiert und zu dem Anregungslicht-Output-Steuerschaltkreis (18a) ausgesendet wird.

42. Optisches Übertragungssystem nach Anspruch 37, wobei das wellenlängen-multiplexierte Signallicht Wellenlängen in einem Wellenlängenbereich von 1550 nm hat und
Output-Licht-Wellenlängen von beiden, der ersten Anregungslichtquelle (6) und der zweiten Anregungslichtquelle (6), in einem Wellenlängenbereich von 1480 nm liegen.

43. Optisches Übertragungssystem nach Anspruch 35, 39 oder 41, wobei das wellenlängen-multiplexierte Signallicht auf Amplitude, Frequenz oder Phasenmodulation auf der Basis des zusätzlichen Steuersignals gerichtet ist.

44. Optisches Übertragungssystem nach Anspruch 34 oder 38, wobei jeder der optischen Verstärkungs-Repeater ferner
einen optischen Isolator (4) umfasst, der zwischen dem ersten Wellenlängen-Multiplex-Koppler (2) und der Output-Seite der optischen Faser-Übertragungsleitung angeordnet ist, um Lichtwellen durchzuführen, die in Richtung der Output-Seite der optischen Faser laufen, während Lichtwellen, die in die entgegengesetzte Richtung laufen, ausgeschlossen werden.

45. Optisches Übertragungssystem nach Anspruch 33 oder 37, wobei jeder der optischen Verstärkungs-Repeater ferner
einen Equalizer (10) umfasst, der zwischen dem ersten Wellenlängen-Multiplex-Koppler (2) und der Output-Seite der optischen Faser-Übertragungsleitung angeordnet ist, um Variationen in dem optischen Output-Level des wellenlängen-multiplexierten Signallichts zu reduzieren, ausgegeben von dem optischen Verstärkungsmedium (1).

46. Optisches Übertragungssystem nach Anspruch 33 oder 37, wobei der optische Output-Level-Detektions-Schaltkreis Folgendes umfasst:
einen optischen gerichteten Koppler (5a) zum Verzweigen eines Teils des wellenlängen-multiplexierten Signallichts, das optisch verstärkt ist und Ausgeben der verzweigten Lichtwellen des wellenlängen-multiplexierten Signallichts;
einen optischen Splitter (5b) zum Splitten des wellenlängen-multiplexierten Signallichts in zwei Arten von de-multiplexiertem Licht und Ausgeben desselben; und
einen Steuersignal-Output-Schaltkreis (17) zum Aussenden des Steuersignals gemäß der Level-Differenz der zwei Arten des de-multiplexierten Lichts.

47. Optisches Übertragungssystem nach Anspruch 46, wobei die zwei Arten des de-multiplexierten Lichts zwei Signale eines Lichts mit bestimmten Wellenlängen sind, zuvor ausgewählt aus all den Wellenlängen, die in dem wellenlängen-multiplexierten Signallicht enthalten sind, ausgegeben von dem optischen Verstärkungsmedium.

48. Optisches Übertragungssystem nach Anspruch 33 oder 37, wobei der Anregungslicht-Output-Level-Steuerschaltkreis Folgendes umfasst:
einen Speicher zum Speichern einer Beziehung zwischen einer Level-Differenz von den zwei Arten von Signallicht und Ansteuerstrom, zum Zuführen an die erste Anregungslichtquelle (6); und
einen Ansteuerstrom-Setting-Schaltkreis zum Auswählen eines Ansteuerstroms zum Zuführen zu der ersten Anregungslichtquelle, aus den Ansteuerstromwerten, die in dem Speicher gespeichert sind, auf der Basis der Level-Differenz von zwei Arten von Signallicht.

49. Optisches Übertragungssystem nach Anspruch 33 oder 37, wobei jeder der optischen Verstärkungs-Repeater ferner umfasst:
einen Anregungslicht-Output-Steuerschaltkreis (8a, 18a), der mit einer Zuführleitung verbunden ist, was Energie für den optischen Verstärkungs-Repeater zur Verfügung stellt, zum Empfangen eines elektrischen Steuersignals, das von der Zuführleitung übertragen wird, um den optischen Output der ersten Anregungslichtquelle (6, 26) zu steuern.

50. Optisches Übertragungssystem nach Anspruch 49, wobei das elektrische Steuersignal ein elektrisches Signal ist, das der Energie hinzugefügt ist, zugeführt durch die Zuführleitung.

51. Optisches Übertragungssystem nach Anspruch 50, wobei das elektrische Steuersignal ein Spannungs- oder Stromwert der Energie ist, zugeführt durch die Zuführleitung.

## Revendications

1. Procédé d'amplification directe optique dans lequel une lumière de signal multiplexée en longueur d'onde est amplifiée optiquement par un effet d'amplification optique Raman à fibre avant d'être amplifiée par un amplificateur optique utilisant une fibre optique dopée aux terres rares (1) en tant que milieu d'amplification optique, dans lequel l'effet d'amplification optique Raman à fibre se produit dans une ligne de transmission à fibre optique connectée à la fibre optique dopée aux terres rares (1) du côté entrée de la lumière de signal, comprenant les étapes consistant à :
détecter une différence de niveau de plusieurs ondes de lumière de signal contenues dans la lumière de signal multiplexée en longueur d'onde optiquement amplifiée ;
envoyer un signal de commande en se basant sur un résultat de détection de la différence de niveau ; et
commander un niveau de sortie optique d'une lumière d'excitation pénétrant dans ladite fibre optique dopée aux terres rares (1) puis entrant dans ladite ligne de transmission à fibre optique dans un sens opposé au sens dans lequel se déplace la lumière de signal multiplexée en longueur d'onde, en se basant sur le signal de commande.

2. Procédé d'amplification directe optique selon la revendication 1, dans lequel
l'effet d'amplification optique Raman à fibre et l'effet d'amplification optique de la fibre optique dopée aux terres rares (1) sont excités par la lumière d'excitation fournie en entrée à la fibre optique dopée aux terres rares (1) depuis le côté sortie (2) de la lumière de signal.

3. Procédé d'amplification directe optique selon la revendication 1, dans lequel
l'effet d'amplification optique Raman à fibre est excité par une lumière d'excitation additionnelle fournie en entrée à la ligne de transmission à fibre optique depuis le côté entrée de signal (12) de la fibre optique dopée aux terres rares (1) dans un sens opposé au sens dans lequel se déplace la lumière de signal multiplexée en longueur d'onde, et
l'effet d'amplification optique de la fibre optique dopée aux terres rares (1) est excité par la lumière d'excitation fournie en entrée à la fibre optique dopée aux terres rares (1) depuis le côté sortie (2) de la lumière de signal.

4. Procédé d'amplification directe optique selon la revendication 1, dans lequel
l'effet d'amplification optique Raman à fibre est excité par une lumière d'excitation additionnelle fournie en entrée à la ligne de transmission à fibre optique depuis le côté entrée de signal (12) de la fibre optique dopée aux terres rares (1) dans un sens opposé au sens dans lequel se déplace le signal multiplexé en longueur d'onde, et
l'effet d'amplification optique de la fibre optique dopée aux terres rares (1) est excité par une lumière d'excitation fournie en entrée à la fibre optique dopée aux terres rares (1) à la fois depuis le côté entrée (3) de la lumière de signal et depuis le côté sortie (2) de la lumière de signal.

5. Procédé d'amplification directe optique selon la revendication 1, dans lequel
l'intensité de la lumière d'excitation pour exciter l'effet d'amplification optique Raman à fibre est commandée pour réduire la dépendance à la longueur d'onde de l'intensité de la lumière de sortie de l'amplificateur optique utilisant la fibre optique dopée aux terres rares (1) en tant que milieu d'amplification optique.

6. Procédé d'amplification directe optique selon la revendication 5, dans lequel
la lumière d'excitation pour l'effet d'amplification optique Raman à fibre et l'effet d'amplification optique à fibre dopée aux terres rares est fournie en entrée à la fibre optique dopée aux terres rares (1) depuis le côté sortie (2) de la lumière de signal.

7. Procédé d'amplification directe optique selon la revendication 5, dans lequel
une lumière d'excitation additionnelle pour l'effet d'amplification optique Raman à fibre est fournie en entrée à la ligne de transmission à fibre optique dans un sens opposé au sens dans lequel se déplace le signal multiplexé en longueur d'onde depuis le côté sortie de signal (12) de la ligne de transmission à fibre optique.

8. Procédé d'amplification directe optique selon la revendication 5, dans lequel
une lumière d'excitation additionnelle pour l'effet d'amplification optique à fibre dopée aux terres rares est fournie en entrée à la fibre optique dopée aux terres rares (1) depuis le côté entrée (3) de la lumière de signal.

9. Procédé d'amplification directe optique selon la revendication 5, dans lequel l'intensité de la lumière d'excitation est commandée par un signal de commande additionnel, et le signal de commande additionnel est transmis à travers la ligne de transmission à fibre optique.

10. Procédé d'amplification directe optique selon la revendication 5, dans lequel l'intensité de la lumière d'excitation est en outre commandée par un signal de commande électrique, et le signal de commande électrique est transmis par une ligne d'alimentation pour un circuit électrique (8a) commandant la lumière d'excitation.

11. Répéteur à amplification optique comprenant :
un milieu d'amplification optique (1) qui amplifie directement une lumière de signal multiplexée en longueur d'onde envoyée depuis le côté entrée d'une ligne de transmission à fibre optique vers le côté sortie de ladite ligne de transmission à fibre optique ;
un premier coupleur à multiplexage de longueur d'onde (2) disposé entre ledit milieu d'amplification optique (1) et le côté sortie de ladite ligne de transmission à fibre optique, et connecté au côté sortie dudit milieu d'amplification optique (1) de sorte qu'une première onde de lumière d'excitation sera couplée audit milieu d'amplification optique (1) dans un sens opposé au sens dans lequel se déplace la lumière de signal multiplexée en longueur d'onde ;
une première source de lumière d'excitation (6) qui émet la première onde de lumière d'excitation pénétrant dans ledit milieu d'amplification optique (1) à travers ledit premier coupleur à multiplexage de longueur d'onde (2), puis entrant du côté entrée de ladite lumière de transmission à fibre optique dans un sens opposé au sens dans lequel se déplace la lumière de signal multiplexée en longueur d'onde ;
un circuit de détection de niveau de sortie optique (15, 16) disposé du côté sortie de ladite ligne de transmission à fibre optique pour détecter une différence de niveau de plusieurs ondes de lumière de signal contenues dans la lumière de signal multiplexée en longueur d'onde amplifiée optiquement de façon à envoyer un signal de commande en se basant sur le résultat de détection ; et
un circuit de commande de niveau de sortie de lumière d'excitation (8a) pour recevoir le signal de commande pour commander le niveau de sortie optique de ladite première source de lumière d'excitation (6) ;
moyennant quoi le répéteur est configuré pour une amplification optique de la lumière de signal par un effet d'amplification optique Raman à fibre au niveau du côté entrée de la ligne de transmission à fibre optique avant amplification par le milieu d'amplification optique.

12. Répéteur à amplification optique selon la revendication 11, dans lequel la première onde de lumière d'excitation entrant du côté entrée de ladite première ligne de transmission à fibre optique excite l'effet d'amplification optique Raman à fibre.

13. Répéteur à amplification optique selon la revendication 11, comprenant en outre :
un deuxième coupleur à multiplexage de longueur d'onde (3) disposé entre le côté entrée de ladite ligne de transmission à fibre optique et ledit milieu d'amplification optique (1) de sorte qu'une deuxième onde de lumière d'excitation est synthétisée ou multiplexée dans la lumière de signal multiplexée en longueur d'onde ; et
une deuxième source de lumière d'excitation (7) pour exciter ledit milieu d'amplification optique (1) à travers ledit deuxième coupleur à multiplexage de longueur d'onde (3).

14. Répéteur à amplification optique selon la revendication 13, comprenant en outre :
un coupleur directionnel optique (5) disposé entre le côté entrée de ladite ligne de transmission à fibre optique et ledit deuxième coupleur à multiplexage de longueur d'onde (3) de sorte qu'une partie de la lumière de signal multiplexée en longueur d'onde sera dérivée ; et
un circuit de réception de signal de commande (9) connecté audit coupleur directionnel optique (5) de sorte qu'un signal de commande additionnel contenu dans la lumière de signal multiplexée en longueur d'onde sera extrait et envoyé audit circuit de commande de sortie de lumière d'excitation (8a).

15. Répéteur à amplification optique selon la revendication 11, dans lequel
la lumière de signal multiplexée en longueur d'onde a des longueurs d'onde dans une plage de longueurs d'onde de 1 550 nm, et
les longueurs d'onde de lumière de sortie de ladite première source de lumière d'excitation (6) sont dans une plage de longueurs d'onde de 1 480 nm.

16. Répéteur à amplification optique selon la revendication 11, dans lequel ledit circuit de commande de niveau de sortie de lumière d'excitation (8a) inclut une mémoire pour stocker une relation entre différence de niveau des deux types de lumière de signal et courant de commande à appliquer à ladite première source de lumière d'excitation (6) ; et comprenant en outre un circuit d'établissement de courant de commande pour sélectionner un courant de commande à appliquer à ladite première source de lumière d'excitation parmi les valeurs de courant de commande stockées dans ladite mémoire en se basant sur la différence de niveau de deux types de lumière de signal.

17. Répéteur à amplification optique selon la revendication 11, comprenant en outre
un circuit de commande de sortie de lumière d'excitation (18), connecté à une ligne d'alimentation qui sert d'alimentation pour ledit répéteur d'amplification optique, pour recevoir un signal de commande électrique transmis depuis la ligne d'alimentation pour commander la sortie optique de ladite première source de lumière d'excitation (6).

18. Répéteur à amplification optique selon la revendication 11, comprenant en outre :
un deuxième coupleur à multiplexage de longueur d'onde (3) disposé entre le côté entrée de ladite ligne de transmission à fibre optique et ledit milieu d'amplification optique (1) de sorte qu'une deuxième onde de lumière d'excitation est couplée au côté entrée de ladite ligne de transmission à fibre optique dans un sens identique au sens dans lequel se déplace la lumière de signal multiplexée en longueur d'onde ; et
une deuxième source de lumière d'excitation (7) qui émet la deuxième onde de lumière d'excitation à coupler au côté entrée de ladite ligne de transmission à fibre optique par l'intermédiaire dudit deuxième coupleur à multiplexage de longueur d'onde (3).

19. Répéteur à amplification optique selon la revendication 18, dans lequel la première onde de lumière d'excitation entrant du côté entrée de ladite ligne de transmission à fibre optique excite l'effet d'amplification optique Raman à fibre.

20. Répéteur à amplification optique selon la revendication 11 ou 18, comprenant en outre :
un coupleur directionnel optique (5) disposé entre le côté entrée de ladite ligne de transmission à fibre optique et ledit milieu d'amplification optique (1) pour dériver une partie de la lumière de signal multiplexée en longueur d'onde ; et
un circuit de réception de signal de commande (9, 29) connecté audit coupleur directionnel optique (5) de sorte qu'un signal de commande additionnel contenu dans la lumière de signal multiplexée en longueur d'onde est extrait et envoyé audit circuit de commande de sortie de lumière d'excitation (8a, 18, 22).

21. Répéteur à amplification optique selon la revendication 18, comprenant en outre :
un troisième coupleur à multiplexage de longueur d'onde (12) disposé entre le côté entrée de la ligne de transmission à fibre optique et ledit milieu d'amplification optique (1) de sorte qu'une troisième onde de lumière d'excitation est synthétisée ou multiplexée dans la lumière de signal multiplexée en longueur d'onde dans un sens opposé au sens dans lequel se déplace la lumière de signal multiplexée en longueur d'onde ; et
une troisième source de lumière d'excitation (21) pour exciter ledit effet d'amplification optique Raman à fibre par l'intermédiaire dudit troisième coupleur à multiplexage de longueur d'onde (12).

22. Répéteur à amplification optique selon la revendication 21, comprenant en outre :
un coupleur directionnel optique (5) disposé entre le côté entrée de ladite ligne de transmission à fibre optique et ledit deuxième coupleur à multiplexage de longueur d'onde (3) de sorte qu'une partie de la lumière de signal multiplexée en longueur d'onde sera dérivée ; et
un circuit de réception de signal de commande (29) connecté audit coupleur directionnel optique (5) de sorte qu'un signal de commande additionnel contenu dans la lumière de signal multiplexée en longueur d'onde sera extrait et envoyé audit circuit de commande de sortie de lumière d'excitation (18a, 18b, 22).

23. Répéteur à amplification optique selon la revendication 18, dans lequel
la lumière de signal multiplexée en longueur d'onde a des longueurs d'onde dans une plage de longueurs d'onde de 1 550 nm,
et les longueurs d'onde de lumière de sortie à la fois de ladite première et de ladite deuxième source de lumière d'excitation (7) sont dans une plage de longueurs d'onde de 1 480 nm.

24. Répéteur à amplification optique selon la revendication 14, 20 ou 22, dans lequel la lumière de signal multiplexée en longueur d'onde est soumise à une modulation en amplitude, fréquence ou phase en se basant sur le signal de commande additionnel.

25. Répéteur à amplification optique selon la revendication 11 ou 18, comprenant en outre un isolateur optique (4) disposé entre ledit premier coupleur à multiplexage de longueur d'onde (2) et le côté sortie de ladite ligne de transmission à fibre optique de façon à faire passer les ondes de lumière se déplaçant vers le côté sortie de ladite fibre optique tout en obturant les ondes de lumière se déplaçant dans le sens opposé.

26. Répéteur à amplification optique selon la revendication 11 ou 18, comprenant en outre un égaliseur (10) disposé entre ledit premier coupleur à multiplexage de longueur d'onde (2) et le côté sortie de ladite ligne de transmission à fibre optique de façon à réduire les variations de niveau de sortie optique de la lumière de signal multiplexée en longueur d'onde fournie en sortie par ledit milieu d'amplification optique (1).

27. Répéteur à amplification optique selon la revendication 11, dans lequel ledit circuit de détection de niveau de sortie optique inclut en outre
un coupleur directionnel optique (5a) pour dériver une partie de la lumière de signal multiplexée en longueur d'onde optiquement amplifiée et fournir en sortie des ondes de lumière dérivées de la lumière de signal multiplexée en longueur d'onde ;
un séparateur optique (5b) pour séparer la lumière de signal multiplexée en longueur d'onde en deux types de lumière démultiplexée et fournir celle-ci en sortie ; et
un circuit de sortie de signal de commande (17) pour envoyer le signal de commande selon la différence de niveau des deux types de lumière démultiplexée.

28. Répéteur à amplification optique selon la revendication 27, dans lequel les deux types de lumière démultiplexée sont deux signaux de lumière avec certaines longueurs d'onde choisies au préalable parmi toutes les longueurs d'onde contenues dans la lumière de signal multiplexée en longueur d'onde fournie en sortie par ledit milieu d'amplification optique (1).

29. Répéteur à amplification optique selon la revendication 28, dans lequel ledit circuit de commande de niveau de sortie de lumière d'excitation inclut
une mémoire pour stocker une relation entre la différence de niveau des deux types de lumière de signal et un courant de commande à appliquer à ladite première source de lumière d'excitation (6) ; et
un circuit d'établissement de courant de commande pour sélectionner le courant de commande à appliquer à ladite première source de lumière d'excitation parmi les valeurs de courant de commande stockées dans ladite mémoire en se basant sur la différence de niveau de deux types de lumière de signal.

30. Répéteur à amplification optique selon la revendication 18, comprenant en outre
un circuit de commande de lumière d'excitation (38), connecté à une ligne d'alimentation qui sert d'alimentation pour ledit répéteur à amplification optique, pour recevoir un signal de commande électrique transmis depuis la ligne d'alimentation pour commander les sorties optiques de ladite première source de lumière d'excitation (26) et de ladite deuxième source de lumière d'excitation (27).

31. Répéteur à amplification optique selon la revendication 17 ou 30, dans lequel le signal de commande électrique est un signal électrique superposé sur l'alimentation fournie par l'intermédiaire de ladite ligne d'alimentation.

32. Répéteur à amplification optique selon la revendication 17 ou 30, dans lequel le signal de commande électrique est une valeur de tension ou de courant de l'alimentation fournie par l'intermédiaire de ladite ligne d'alimentation.

33. Système de transmission optique comprenant :
une pluralité de répéteurs à amplification optique tels qu'indiqués dans la revendication 11, comprenant en outre :
une station à extrémité émettrice de lumière au niveau de laquelle un émetteur optique est prévu pour envoyer de la lumière de signal multiplexée en longueur d'onde avec des longueurs d'onde différentes les unes des autres ; et
une station à extrémité réceptrice de lumière au niveau de laquelle un récepteur optique est prévu pour recevoir la lumière de signal multiplexée en longueur d'onde amplifiée pour convertir chaque composante de lumière de signal en un signal électrique ; et
des lignes de transmission à fibre optique pour des connexions entre ladite station à extrémité émettrice de lumière et le premier répéteur à amplification optique, entre lesdits répéteurs à amplification optique, et entre le dernier répéteur à amplification optique et ladite station à extrémité réceptrice de lumière, respectivement.

34. Système de transmission optique selon la revendication 33, dans lequel chacun desdits répéteurs à amplification optique inclut en outre
un deuxième coupleur à multiplexage de longueur d'onde (3) disposé entre le côté entrée de ladite ligne de transmission à fibre optique et ledit milieu d'amplification optique (1) de sorte qu'une deuxième onde de lumière d'excitation est synthétisée ou multiplexée dans la lumière de signal multiplexée en longueur d'onde ; et
une deuxième source de lumière d'excitation (7) pour exciter ledit milieu d'amplification optique (1) par l'intermédiaire dudit deuxième coupleur de multiplexage en longueur d'onde (3).

35. Système de transmission optique selon la revendication 34, dans lequel chacun desdits répéteurs à amplification optique inclut en outre
un coupleur directionnel optique (5) disposé entre le côté entrée de ladite ligne de transmission à fibre optique et ledit deuxième coupleur de multiplexage à longueur d'onde (3) de sorte qu'une partie de ladite lumière de signal multiplexée en longueur d'onde sera dérivée ; et
un circuit de réception de signal de commande (9) connecté audit coupleur directionnel optique (5) de sorte qu'un signal de commande additionnel contenu dans la lumière de signal multiplexée en longueur d'onde sera extrait et envoyé audit circuit de commande de sortie de lumière d'excitation (8a).

36. Système de transmission optique selon la revendication 33, dans lequel
la lumière de signal multiplexée en longueur d'onde a des longueurs d'onde dans une plage de longueurs d'onde de 1 550 nm, et
les longueurs d'onde de lumière de sortie de ladite première source de lumière d'excitation (6) sont dans une plage de longueurs d'onde de 1 480 nm.

37. Système de transmission optique, comprenant une pluralité de répéteurs à amplification optique tels qu'indiqués dans la revendication 18, comprenant en outre :
une station à extrémité réceptrice de lumière au niveau de laquelle un récepteur optique est prévu pour recevoir la lumière de signal multiplexée en longueur d'onde pour convertir chaque composante de la lumière de signal en un signal électrique ; et
des lignes de transmission à fibre optique pour des connexions entre ladite station à extrémité émettrice de lumière et le premier répéteur à amplification optique, entre lesdits répéteurs à amplification optique, et entre le dernier répéteur à amplification optique et ladite station à extrémité réceptrice de lumière, respectivement.

38. Système de transmission optique selon la revendication 33 ou 37, dans lequel la première onde de lumière d'excitation entrant du côté entrée de ladite ligne de transmission à fibre optique excite l'effet d'amplification optique Raman à fibre.

39. Système de transmission optique selon la revendication 33 ou 37, dans lequel chacun desdits répéteurs à amplification optique inclut en outre
un coupleur directionnel optique (5) disposé entre le côté entrée de ladite ligne de transmission à fibre optique et ledit milieu d'amplification optique (1) de sorte qu'une de la lumière de signal multiplexée en longueur d'onde sera dérivée ; et
un circuit de réception de signal de commande (9, 29) connecté audit coupleur directionnel optique (5) de sorte qu'un signal de commande additionnel contenu dans la lumière de signal multiplexée en longueur d'onde sera extrait et envoyé audit circuit de commande de sortie de lumière d'excitation (8a, 18a).

40. Système de transmission optique selon la revendication 37, dans lequel chacun desdits répéteurs à amplification optique inclut en outre
un troisième coupleur à multiplexage de longueur d'onde (12) disposé entre le côté entrée de ladite ligne de transmission à fibre optique et ledit milieu d'amplification optique (1) de sorte qu'une troisième onde de lumière d'excitation est synthétisée ou multiplexée dans la lumière de signal multiplexée en longueur d'onde dans le sens opposé au sens dans lequel se déplace la lumière de signal multiplexée en longueur d'onde ; et
une troisième source de lumière d'excitation (21) pour exciter ledit effet d'amplification optique Raman à fibre par l'intermédiaire dudit troisième coupleur à multiplexage de longueur d'onde (12).

41. Système de transmission optique selon la revendication 40, dans lequel chacun desdits répéteurs à amplification optique inclut en outre
un coupleur directionnel optique (5) disposé entre le côté entrée de ladite ligne de transmission à fibre optique et ledit deuxième coupleur de multiplexage à longueur d'onde (3) de sorte qu'une partie de la lumière de signal multiplexée en longueur d'onde sera dérivée ; et
un circuit de réception de signal de commande (29) connecté audit coupleur directionnel optique (5) de sorte qu'un signal de commande additionnel contenu dans la lumière de signal multiplexée en longueur d'onde sera extrait et envoyé audit circuit de commande de sortie de lumière d'excitation (18a).

42. Système de transmission optique selon la revendication 37, dans lequel
la lumière de signal multiplexée en longueur d'onde a des longueurs d'onde dans une plage de longueurs d'onde de 1 550 nm, et
les longueurs d'onde de lumière de sortie de ladite première source de lumière d'excitation (6) et ladite deuxième source de lumière d'excitation (7) sont dans une plage de longueurs d'onde de 1 480 nm.

43. Système de transmission optique selon la revendication 35, 39 ou 41, dans lequel la lumière de signal multiplexée en longueur d'onde est soumise à une modulation en amplitude, fréquence ou phase en se basant sur le signal de commande additionnel.

44. Système de transmission optique selon la revendication 34 ou 38, dans lequel chacun desdits répéteurs à amplification optique inclut en outre
un isolateur optique (4) disposé entre ledit premier coupleur à multiplexage de longueur d'onde (2) et le côté sortie de ladite ligne de transmission à fibre optique de façon à faire passer les ondes de lumière se déplaçant vers le côté sortie de ladite fibre optique tout en obturant les ondes de lumière se déplaçant dans le sens opposé.

45. Système de transmission optique selon la revendication 33 ou 37, dans lequel chacun desdits répéteurs à amplification optique inclut en outre
un égaliseur (10) disposé entre ledit premier coupleur à multiplexage de longueur d'onde (2) et le côté sortie de ladite ligne de transmission à fibre optique de façon à réduire les variations de niveau de sortie optique de la lumière de signal multiplexée en longueur d'onde fournie en sortie par ledit milieu d'amplification optique (1).

46. Système de transmission optique selon la revendication 33 ou 37, dans lequel ledit circuit de détection de niveau de sortie optique inclut
un coupleur directionnel optique (5a) pour dériver une partie de la lumière de signal multiplexée en longueur d'onde optiquement amplifiée et fournir en sortie des ondes de lumière dérivées de la lumière de signal multiplexée en longueur d'onde ;
un séparateur optique (5b) pour séparer la lumière de signal multiplexée en longueur d'onde en deux types de lumière démultiplexée et fournir celle-ci en sortie ; et
un circuit de sortie de signal de commande (17) pour envoyer le signal de commande selon la différence de niveau des deux types de lumière démultiplexée.

47. Système de transmission optique selon la revendication 46, dans lequel les deux types de lumière démultiplexée sont deux signaux de lumière avec certaines longueurs d'onde choisies au préalable parmi toutes les longueurs d'onde contenues dans la lumière de signal multiplexée en longueur d'onde fournie en sortie par ledit milieu d'amplification optique (1).

48. Système de transmission optique selon la revendication 33 ou 37, dans lequel ledit circuit de commande de niveau de sortie de lumière d'excitation inclut
une mémoire pour stocker une relation entre différence de niveau des deux types de lumière de signal et courant de commande à appliquer à ladite première source de lumière d'excitation (6) ; et
un circuit d'établissement de courant de commande pour sélectionner le courant de commande à appliquer à ladite première source de lumière d'excitation parmi les valeurs de courant de commande stockées dans ladite mémoire en se basant sur la différence de niveau de deux types de lumière de signal.

49. Système de transmission optique selon la revendication 33 ou 37, dans lequel chacun desdits répéteurs à amplification optique inclut en outre
un circuit de commande de sortie de lumière d'excitation (8a, 18a), connecté à une ligne d'alimentation qui fournit une alimentation pour ledit répéteur à amplification optique, pour recevoir un signal de commande électrique transmis depuis la ligne d'alimentation pour commander la sortie optique de ladite première source de lumière d'excitation (6, 26).

50. Système de transmission optique selon la revendication 49, dans lequel le signal de commande électrique est un signal électrique superposé sur l'alimentation fournie par l'intermédiaire de ladite ligne d'alimentation.

51. Système de transmission optique selon la revendication 50, dans lequel le signal de commande électrique est une valeur de tension ou courant de l'alimentation fournie par l'intermédiaire de ladite ligne d'alimentation.
